(19) Europäisches Patentamt
European Patent Office
Office européen des brevets

(11) EP 2 133 686 B1

(12) **EUROPEAN PATENT SPECIFICATION**

(45) Date of publication and mention of the grant of the patent:
**04.12.2019 Bulletin 2019/49**

(21) Application number: **08702857.7**

(22) Date of filing: **01.02.2008**

(51) Int Cl.:
***G01N 21/39*** *(2006.01)*

(86) International application number:
**PCT/JP2008/000125**

(87) International publication number:
**WO 2008/096524 (14.08.2008 Gazette 2008/33)**

(54) **LASER GAS ANALYZER**

LASER-GASANALYSATOR

ANALYSEUR DE GAZ LASER

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **02.02.2007 JP 2007023830**
**25.07.2007 JP 2007192775**
**21.12.2007 JP 2007329645**

(43) Date of publication of application:
**16.12.2009 Bulletin 2009/51**

(73) Proprietor: **Fuji Electric Co., Ltd.**
**Kawasaki-shi**
**Kanagawa (JP)**

(72) Inventors:
- **HIRAYAMA, Noritomo**
  **Tokyo 191-8502 (JP)**
- **KOIZUMI, Kazuhiro**
  **Tokyo 191-8502 (JP)**
- **IIDA, Takashi**
  **Tokyo 191-8502 (JP)**
- **NAKAMURA, Yusuke**
  **Tokyo 141-0032 (JP)**
- **KANAI, Hideo**
  **Tokyo 141-0032 (JP)**

(74) Representative: **Reichl, Wolfgang**
**MERH-IP**
**Matias Erny Reichl Hoffmann**
**Patentanwälte PartG mbB**
**Paul-Heyse-Straße 29**
**80336 München (DE)**

(56) References cited:
**JP-A- 11 142 328**
**JP-A- 11 211 658**
**JP-A- 2001 235 418**
**JP-A- 2004 361 129**
**JP-B2- 3 051 808**
**JP-B2- 3 782 473**
**JP-B2- 02 000 677**
**JP-B2- 06 016 012**
**JP-B2- 06 072 804**

- **WEBSTER C R ET AL: "AIRCRAFT (ER-2) LASER INFRARED ABSORPTION SPECTROMETER (ALIAS) FOR IN-SITU STRATOSPERIC MEASUREMENTS OF HCI, N2O, CH4. NO2, AND HNO3", APPLIED OPTICS, OPTICAL SOCIETY OF AMERICA, WASHINGTON, DC; US, vol. 33, no. 3, 20 January 1994 (1994-01-20), pages 454-472, XP000425018, ISSN: 0003-6935, DOI: 10.1364/AO.33.000454**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 133 686 B1

## Description

### TECHNICAL FIELD

This invention relates to a laser gas analyzer, which uses laser light to measure the concentration of various gases such as the gas in a flue and exhaust gas. A laser gas analyzer, according to the preamble of claim 1, is for instance known from WEBSTER C R ET AL: "AIRCRAFT (ER-2) LASER INFRARED ABSORPTION SPECTROMETER (ALIAS) FOR IN-SITU STRATOSPERIC MEASUREMENTS OF HCI, N2O, CH4. NO2, AND HNO3", APPLIED OPTICS, OPTICAL SOCIETY OF AMERICA, WASHINGTON DC; US, vol. 33, no. 3, 20 January 1994, pages 454-472.

### BACKGROUND ART

Molecules of a gas are known to each have a characteristic absorption spectrum. For example, Fig. 16 is an example of the absorption spectrum of $NH_3$ (ammonia) gas.

A laser gas analyzer is an analyzer which utilizes the fact that the quantity of absorption of laser light with a specific wavelength is proportional to the concentration of the gas being measured; methods of measurement of gas concentration are broadly divided into a two-wavelength difference method and a frequency modulation method. Of these, this invention relates to a laser gas analyzer using the frequency modulation method.

First, the principle of measurement of a laser gas analyzer of the prior art using the frequency modulation method is explained.

Fig. 17 shows the principle of the frequency modulation method, which is for example described in Patent Reference 1. In a frequency modulation method laser gas analyzer, light emitted from a semiconductor laser is frequency-modulated at a central frequency $f_c$ and modulation frequency $f_m$, and irradiates the gas for measurement. Here, the frequency modulation is effected by imparting a sinusoidal waveform to the driving current supplied to the semiconductor laser.

The emission wavelength of a semiconductor laser changes with the driving current and temperature, as indicated in Fig. 18A and Fig. 18B, and so by performing frequency modulation, the emission wavelength is modulated accompanying modulation of the driving current.

As shown in Fig. 17, a gas absorption line is substantially a quadratic function of the modulation frequency, and so this function line plays the role of a discriminator, and in the light-receiving portion a signal is obtained at twice the frequency of the modulation frequency $f_m$ (frequency-doubled signal). Here the modulation frequency $f_m$ may be an arbitrary frequency, so that when for example the modulation frequency $f_m$ is chosen at approximately several kHz, a digital signal processor (DSP) or general-purpose processor can be used to extract the frequency-doubled signal and perform other sophisticated signal processing.

Further, if envelope detection is performed by the light-receiving portion, the fundamental wave can be estimated through amplitude modulation. By phase-synchronized detection of the ratio of the amplitude of this fundamental wave and the amplitude of the frequency-doubled signal, a signal can be obtained which is proportional to the concentration of the gas for measurement, regardless of distance.

In this frequency modulation method, among various types of semiconductor lasers, distributed-feedback semiconductor lasers (DFB lasers) are often used to emit laser light at a single wavelength to measure gas concentrations.

In this case, because the spectral line width of the light emitted by the DFB laser is narrower than the absorption line width of the gas for measurement, the emission wavelength of the DFB laser must be matched to the absorption wavelength of the gas for measurement.

One such method involves using a reference gas cell, into which the same gas component as the gas for measurement is sealed in advance, and controlling the DFB laser emission wavelength through the temperature.

For example, the gas concentration measurement device described in Patent Reference 2 is conventional technology using the above-described detection principle.

Fig. 19 shows the overall configuration of the gas concentration measurement device disclosed in Patent Reference 2.

This gas concentration measurement device 1 primarily comprises a light source unit 2, measurement light condensing portion 3, measurement light amplification portion 4, reception signal detection portion 5, calibration signal generation portion 6, reference signal amplification portion 7 comprising a fundamental wave signal amplifier 7A and frequency-doubled signal amplifier 7B, reference signal detection portion 8 comprising a signal differential detector 8A and signal synchronous detector 8B, wavelength stabilization control circuit 9, temperature stabilization PID circuit 10, current stabilization circuit 11, measurement/calibration switching portion 12, and computation portion 13.

The light source unit 2 emits laser light at a wavelength matching the absorption line characteristic of the above-described gas for measurement; as shown in Fig. 20A, a semiconductor laser module 21, reference gas cell 22, and photodetector (light-receiving portion) 23 are accommodated within a box-shape case 26 comprising a metal package.

As shown in Fig. 20B, a semiconductor laser (laser diode) 24 which emits frequency-modulated laser light from both faces is provided inside the case 21a of the semiconductor laser module 21. As shown in Fig. 20A, an optical cable 25 comprising a connector 25a extends from the case 21a, and light emitted from one face of the semiconductor laser 24 is emitted, via the optical cable 25, to the outside (into the environment of the gas for measurement) from the measurement light condensing portion 3 of Fig. 19.

As shown in Fig. 20A, a Peltier element or other temperature control element (not shown) is provided, with a cooling fin 27 mounted, on the bottom face of the case 26. The oscillation wavelength is controlled by controlling the operating temperature at a constant temperature by means of this temperature control element.

As shown in Fig. 20B, aspherical lenses 29a and 29b not having a flat face are provided on the optical axis on the front and rear sides of the semiconductor laser 24, to condense the emitted laser light. By using these aspherical lenses 29a, 29b as condensing lenses, the occurrence of reflection and return of light to the semiconductor laser 24 is prevented.

As shown in Fig. 20B, optical isolators 30a and 30b are provided on the optical axis on the front and rear sides of the semiconductor laser 24, on the outsides of the aspherical lenses 29a, 29b.

Through application of magnetic flux to a crystal provided between a polarizer which passes only light with a 90° polarization plane and an analyzer which passes only light with a 45° polarization plane, these optical isolators 30a, 30b rotate the polarization plane of light transmitted in the crystal and halt the transmission of reflected light in the polarizer, and prevent the return of reflected light to the semiconductor laser 24.

As shown in Fig. 20A and Fig. 20B, the reference gas cell 22 provided on the optical axis on the rear side of the semiconductor laser 24 is used for stabilization of the measurement light oscillation wavelength and calibration of the concentration of the gas for measurement. In this reference gas cell 22, penetrating holes to transmit light are formed in the opposing faces of a hollow metal body 22a, and after sealing a reference gas into the metal body 22a, the penetrating holes are sealed with glass windows 22b.

The reference gas cell 22 has an inner diameter which is determined in advance, and the reference gas sealed therein is of substantially the same composition and pressure as the gas for measurement in the environment of the measurement location. For example, if the environment of the measurement location is air, then the reference gas is air-balanced, that is, has the same composition as air, and the pressure is also one atmosphere.

The reference gas cell 22 is immobilized in a position at which light emitted rearward on the rear side of the aspherical lens 29b is easily made incident. Laser light which has passed through the reference gas cell 22 is received and detected by the photodetector 23 provided on the rear side thereof.

It is preferable that the above reference gas cell 22 have both end faces through which light passes formed obliquely (for example at approximately 6° with respect to the emission optical axis), in order to reduce the quantity of light returning to the semiconductor laser 24.

In Fig. 19, the measurement light condensing portion 3 emits light from the semiconductor laser 24 to the outside, and condenses measurement light which has been reflected by a gas pipe or similar for measurement by means of the lens 31. And, the measurement light condensing portion 3 detects the condensed light by means of the photodetector 32, converting the light into an electrical signal.

The measurement light amplification portion 4 comprises a preamp, and converts the photocurrent detected by the photodetector 32 into a voltage, which is amplified and output. In the measurement light amplification portion 4, the optimum amplifications of each of the fundamental wave signal and the frequency-doubled signal are set such that the fundamental wave phase-sensitive detection signal (f signal, hereafter abbreviated "fundamental wave signal") and the frequency-doubled phase-sensitive detection signal (2f signal, hereafter abbreviated "frequency-doubled signal") detected by the reception signal detection portion 5 are at substantially the same level.

When the measurement/calibration switching portion 12 is switched to the side of the measurement light amplification portion 4, the reception signal detection portion 5 processes measurement light signals from the measurement light amplification portion 4, and detects the fundamental wave signal (f signal), frequency-doubled signal (2f signal), and 2f/f signal.

And, when the measurement/calibration switching portion 12 is switched to the side of the calibration signal generation portion 6, the reception signal detection portion 5 processes the signal from the calibration signal generation portion 6, and detects the fundamental wave signal for calibration (rf signal), frequency-doubled signal for calibration (r2f signal), and r2f/rf signal.

In the above configuration, the emission wavelength of the semiconductor laser 24 is controlled using the reference gas cell 22. And, by extracting the 2f signal which indicates the gas concentration from the output of the photodetector 32, the concentration of the gas for measurement is measured.

Patent Reference 1: Japanese Patent Application Laid-open No. H7-151681 (paragraph [0005], Fig. 4, and similar)

Patent Reference 2: Japanese Patent Application Laid-open No. 2001-235418 (paragraphs [0012] to [0024], Fig.

2, Fig. 11, and similar)

As explained above, in a frequency modulation laser gas analyzer, the laser emission wavelength must be matched to the absorption wavelength of the gas for measurement.

Consequently, a reference gas cell in which is sealed the same gas as the gas for measurement is necessary; but it is difficult to detect the concentration of a gas sealing in a reference gas cell of which is impossible or difficult.

Further, gas leakage from the reference gas cell itself must be considered when using a reference gas cell, and in cases in which the gas for measurement is a corrosive gas such as HCl, if a reference gas which is the same leaks, the surrounding optical components are degraded. In addition, the effects of axis shifts and damage to the reference gas cell due to vibrations must be considered; and the use of a reference gas cell is itself undesirable.

Further, even when a reference gas cell is used and the laser emission wavelength is fixed at a specific wavelength, temperature adjustment using PID control or similar must be performed to fix the wavelength to the specific wavelength with stability. However, the emission wavelength of an ordinary DFB laser element has a temperature dependence of approximately 100 pm/°C, so that in order to detect ammonia or similar, the absorption line width of which is only approximately 40 pm, a wavelength stability of 1 pm or less, that is, a temperature stability of 0.01° or less, is necessary.

In recent years, ICs for PID control have been supplied by for example Linear Technology Corp. and Maxim Integrated Products Inc., and the temperature adjustment stability of these ICs is 0.001°C to 0.01°C. However, the above temperature ranges are for portions with an embedded thermistor, and not the DFB laser element.

When the ambient temperature of the semiconductor laser element is not constant, the emission wavelength fluctuates, and so matching the emission wavelength of the semiconductor laser to the absorption wavelength of the gas for measurement and performing measurements is itself problematic; and when using the technology of the prior art, improvements in long-term stability and measurement precision are difficult.

Further, even when the gas for measurement and the gas component sealed within the reference gas cell are the same, there is some fluctuation in the absorption width and wavelength of the gas actually being measured. Moreover, when the temperature of the reference gas and the temperature of the gas for measurement differ, it is difficult to perfectly match the laser emission wavelength to the absorption wavelength of the gas for measurement.

To summarize the above, in technology of the prior art a reference gas cell must be used and the laser emission wavelength must be matched to the absorption wavelength of the gas for measurement; the wavelength stability affects measurement performance.

Also, in order to manufacture a reference gas cell of a corrosive gas such as HCl or HF, expensive gas sealing equipment must be used, and there is the problem that gas components which can be measured are constrained by the ability to manufacture such a reference gas cell.

As explained above, in order to measure gas concentration using a laser gas analyzer, a laser element which emits light coinciding with the absorption wavelength is necessary; but even when a laser element satisfying this condition exists, if the reference gas cell cannot be manufactured, use as an analyzer is not possible.

Further, such a device configuration is also undesirable in that measures are necessary to address gas leakage from the reference gas cell.

Also, because the gas actually measured using this type of gas analyzer is for example the gas within a flue, the gas analyzer is often set up in an environment in which much dust is present. In such cases, the dust may block the laser light, and there are concerns that the quantity of light received, and hence the reception signal, may be reduced. If the reception signal is reduced, the amplitude of the absorption waveform of the gas detected is also reduced, so that the gas concentration cannot be accurately detected.

Hence at present, a method is adopted in which a dust meter is set up separately from the gas analyzer and the dust quantity is measured, and the measured value is used to correct the gas concentration.

However, because in this method a separate dust meter is required, there is the problem that equipment costs are increased.

## DISCLOSURE OF THE INVENTION

Hence an object of the invention is to provide a laser gas analyzer which does not require a reference gas cell to scan the absorption wavelength of the gas for measurement, that is, the laser element emission wavelength, which has a simplified device design, and which has reduced cost.

A further object of the invention is to provide a laser gas analyzer which eliminates the need to stabilize the emission wavelength at a specific wavelength, and which enables gas concentration measurement with high precision.

Still another object of the invention is to provide a laser gas analyzer which does not require a dust meter or other instrument, and which enables accurate gas concentration measurement even in environments in which dust or similar exists.

The invention is defined by the laser gas analyzer of claim 1.

In order to attain the above objects, the laser gas analyzer of Claim 1 comprises a light source portion which emits frequency-modulated laser light, an optical system which collimates light emitted from the light source portion, an optical system which condenses transmitted light which has propagated from this optical system via a space in which gas for measurement exists, a light-receiving portion which receives light condensed by this optical system, and a signal processing circuit which processes an output signal of the light-receiving portion. From the output signal of the light-receiving portion, the signal processing circuit detects a signal of a component at twice the frequency of the modulation signal (the so-called frequency-doubled signal) in the light source portion, and measures the concentration of the gas for measurement.

Also, in a laser gas analyzer of this invention, the light source portion comprises a laser driving signal generation portion which combines a wavelength scanning driving signal that varies the emission wavelength of a laser element so as to scan the absorption wavelength of the gas for measurement and a high-frequency modulation signal to modulate the emission wavelength, and which outputs the result as a laser driving signal, a current control portion which converts the laser driving signal into a current, and the laser element to which the current output from the current control portion is supplied.

Further, the signal processing circuit is characterized in comprising a synchronous detection circuit which detects the amplitude of the signal of the frequency-doubled component from the output signal of the light-receiving portion, and a computation portion which detects the concentration of the gas for measurement from a gas absorption waveform existing in the output signal of this synchronous detection circuit.

In a particular embodiment, the waveform of the wavelength scanning driving signal has an offset portion, has a portion which linearly changes the current supplied to the laser element to gradually change the emission wavelength of the laser element, and is repeated with a constant period. Here, it is desirable that the offset portion be set to a value such that a current equal to or greater than a threshold current value of the laser element is supplied to the laser element.

In a non-claimed example, the computation portion integrates a portion of or the entirety of the signal of the frequency-doubled component, and detects the concentration of the gas for measurement from the integration value.

In another non-claimed example, the computation portion may detect the concentration of the gas for measurement from a maximum value or from a minimum value of the gas absorption waveform.

In the invention, the computation portion detects the concentration of the gas for measurement from the difference between a maximum value and a minimum value of the gas absorption waveform; in a particular embodiment the concentration of the gas for measurement may be computed by multiplying the difference by a gas concentration conversion coefficient.

In the invention, it is provided that, taking as reference the timing of a pulse-shape trigger signal output from the laser driving signal generation portion, the computation portion detect in advance the timing of occurrence of the maximum value and the minimum value of the gas absorption waveform, and save the timing.

In the invention, the trigger signal must be synchronized with the wavelength scanning driving signal, and, for example, may be synchronized with the timing of the wavelength scanning driving signal at which the driving current of the laser element is made zero.

Further, in another example, the signal processing circuit in Claim 1 further comprises extraction means for extracting the component of the wavelength scanning driving signal from the output signal of the light-receiving portion. And, the computation portion uses a received light quantity correction coefficient, which is the ratio of the output signal of the extraction means and the received light quantity setting value (for example, in cases in which measurements are performed in a clean environment without dust, the output signal level of the extraction means when the received light quantity is maximum, as described in Claim 13), to correct the amplitude of the gas absorption waveform.

## BRIEF DESCRIPTION OF THE DRAWINGS

Fig. 1 is a configuration diagram showing an aspect of the invention;

Fig. 2 is a configuration diagram of the light source portion in Fig. 1;

Fig. 3 is an output signal waveform diagram for the wavelength scanning driving signal generation portion in Fig. 2;

Fig. 4 is a configuration diagram showing a first example, outside the scope of the present invention, of the signal processing circuit in Fig. 1;

Fig. 5 shows a laser element scanning waveform, $NH_3$ gas absorption waveform and synchronous detection circuit output waveform, to explain operation of an aspect of the invention;

Fig. 6 is a configuration diagram showing a second example, according to the invention, of the signal processing circuit in Fig. 1;

Fig. 7 is an explanatory diagram of a trigger signal sent to the signal processing circuit of Fig. 6;

Fig. 8 shows output signals of the I/V converter and the synchronous detection circuit in Fig. 6;
Fig. 9 shows output signals of the synchronous detection circuit in Fig. 6;
Fig. 10 shows output signals of the I/V converter and the synchronous detection circuit in Fig. 6;
Fig. 11 is a configuration diagram showing a third example, outside the scope of the present invention, of the signal processing circuit in Fig. 1;
Fig. 12A is a waveform diagram of a light reception signal in Fig. 11;
Fig. 12B is a waveform diagram of a light reception signal in Fig. 11;
Fig. 13A shows an output waveform of the synchronous detection circuit corresponding to Fig. 12A;
Fig. 13B shows an output waveform of the synchronous detection circuit corresponding to Fig. 12B;
Fig. 14 shows the relation between the received quantity of light level and the gas absorption waveform amplitude level;
Fig. 15A is a waveform diagram of a wavelength scanning signal component corresponding to Fig. 12A;
Fig. 15B is a waveform diagram of a wavelength scanning signal component corresponding to Fig. 12B;
Fig. 16 is an example of an $NH_3$ gas absorption spectrum;
Fig. 17 shows the principle of the frequency modulation method;
Fig. 18A shows the change in emission wavelength of a semiconductor laser due to a driving current;
Fig. 18B shows the change in emission wavelength of a semiconductor laser due to temperature;
Fig. 19 is an overall configuration diagram of the gas concentration measurement device disclosed in Patent Reference 2;
Fig. 20A is a configuration diagram of principal portions in Fig. 19; and
Fig. 20B is a configuration diagram of principal portions in Fig. 20A.

## BEST MODE FOR CARRYING OUT THE INVENTION

Below, aspects of the invention are explained, referring to the drawings.

First, Fig. 1 shows the overall configuration of an aspect. In Fig. 1, the flanges 201a and 201b are immobilized, by welding or similar, on the walls 101a and 101b of a flue or other pipe in the interior of which a gas to be measured passes. On one flange 201a is installed a cylindrical cover with a bottom 203a, with a flange seat 202a therebetween.

In the interior of the cover 203a is provided a light source portion 204, and laser light emitted from the light source portion 204 is collimated to form a parallel beam by an optical system comprising a collimating lens 205. The collimated light passes through the center of the flange 201a and is incident on the interior of the walls 101a, 101b (the flue interior). The parallel beam undergoes absorption while passing through the gas for measurement within the walls 101a, 101b.

On the other flange 201b is installed a cylindrical cover with a bottom 203b, with a flange seat 202b therebetween. The parallel beam passing through the interior of the flue is condensed by the condensing lens 206 within the cover 203b and is received by the light-receiving portion 207. This light is converted into an electrical signal by the light-receiving portion 207, and is input to the later-stage signal processing circuit 208.

Next, Fig. 2 shows the configuration of the light source portion 204.

This light source portion 204 comprises a laser driving signal generation portion 204s, in turn comprising a wavelength scanning driving signal generation portion 204a and a high-frequency modulation signal generation portion 204b.

The wavelength scanning driving signal generation portion 204a changes the emission wavelength of the laser element so as to scan the absorption wavelength of the gas for measurement, and the high-frequency modulation signal generation portion 204b performs frequency modulation of the wavelength using for example a sine wave of approximately 10 kHz, in order to detect the absorption wavelength of the gas for measurement.

The output signals of these signal generation portions 204a, 204b are combined within the laser driving signal generation portion 204s to generate a laser driving signal.

The laser driving signal output from the laser driving signal generation portion 204s is converted into a current by the current control portion 204c, and is supplied to the laser element 204e comprising a semiconductor laser.

A thermistor 204f is provided as a temperature detection element in proximity to the laser element 204e, and a Peltier element 204g is provided in proximity to the thermistor 204f.

The Peltier element 204g is PID (proportional/integral/derivative) controlled by a temperature control portion 204d such that the resistance value of the thermistor 204f is a constant value, so that as a result the temperature of the laser element 204e is stabilized.

As shown in Fig. 3, the output signal of the wavelength scanning driving signal generation portion 204a is substantially a trapezoidal waveform signal, repeated with a constant period.

In Fig. 3, the signal S2 which scans the absorption wavelength is a portion which linearly changes the magnitude of the current supplied to the laser element 204e via the current control portion 204c. By means of this signal S2 the emission wavelength of the laser element 204e is gradually shifted, so that, in the case of ammonia gas for example, scanning of a line of width approximately 0.2 nm is possible.

The signal S1 in Fig. 3 is an offset portion which does not scan the absorption wavelength, but causes the laser element 204e to emit light, and is set to a value equal to or greater than the threshold current value at which emission by the laser element 204e is stable.

Further, the signal S3 is a portion which makes the driving current substantially zero.

Next, Fig. 4 shows the configuration of a first example, outside the scope of the present invention, of the signal processing circuit 208 in Fig. 1. Below, the symbol 208A is assigned to this signal processing circuit of the first embodiment.

The light-receiving portion 207 of Fig. 4 comprises for example a photodiode; a light-receiving element having sensitivity to the emission wavelength of the laser element 204e is used.

In Fig. 4, the output current of the light-receiving portion 207 is converted into a voltage by the I/V converter 208a. The output signal of the I/V converter 208a is input to the synchronous detection circuit 208b, to which a 2f signal (frequency-doubled signal) from the oscillator 208c is also input, and only the amplitude of the frequency-doubled component of the modulated signal of the emitted light is extracted. The output signal of the synchronous detection circuit 208b is sent to the computation portion 208e, which is a CPU or similar, via a noise elimination filter 208d.

Next, a method of measuring the concentration of a gas for measurement is described.

First, the temperature of the laser element 204e is detected in advance using the thermistor 204f. Also, the temperature of the laser element 204e is adjusted by controlling the current in the Peltier element 204g using the temperature control portion 204d, such that the gas for measurement (for example $NH_3$ gas) can be measured (prescribed absorption characteristics can be obtained) at the center portion of the wavelength scanning driving signal S2 shown in Fig. 3.

Thereafter the laser element 204e is driven, laser light is emitted into the space within the walls 101a, 101b in which exists the gas for measurement, and condensed light is made incident on the light-receiving portion 207.

In the signal processing circuit 208A of Fig. 4, when there is no absorption of laser light by the gas for measurement, a frequency-doubled signal is not detected by the synchronous detection circuit 208b, and so the output of the synchronous detection circuit 208b is substantially linear.

On the other hand, when there is laser light absorption by the gas for measurement, a frequency-doubled signal is detected by the synchronous detection circuit 208b, and the output waveform is as shown in Fig. 5. In the waveform, A is the portion which has received absorption by the gas for measurement (the gas absorption waveform); the maximum value or minimum value of this absorption waveform A is equivalent to the concentration of the gas for measurement. Hence in the computation portion 208e either the difference between the maximum value c and the minimum value (b or d) of the gas absorption waveform A is measured, or else a portion of (b through d) or the entirety of (a through e) the gas absorption waveform A is integrated, and from the integrated value the concentration of the gas for measurement is detected.

In Fig. 5, the high-frequency modulation signal frequency is 10 kHz and the wavelength scanning driving signal frequency is 50 Hz; $\lambda_1$ is the wavelength equivalent to the offset, and $\lambda_2$ and $\lambda_3$ are the upper and lower limits of the scanning range equivalent to the absorption wavelength of $NH_3$ gas.

Next, Fig. 6 shows the configuration of a second example, according to the invention, of the signal processing circuit 208. Below, the symbol 208B is assigned to this signal processing circuit of the second example.

The configuration of this signal processing circuit 208B is basically the same as that of the signal processing circuit 208A in Fig. 4, but differs in that a trigger signal S4 from the wavelength scanning driving signal generation portion 204a is input to the computation portion 208e. For convenience of explanation, the output signal of the I/V converter 208a is Sa, and the output signal of the synchronous detection circuit 208b is Sb.

Fig. 7 is used to explain the trigger signal S4. As shown in the figure, the trigger signal S4 is a pulse-shape signal output from the wavelength scanning driving signal generation portion 204a in synchronization with one period of the wavelength scanning driving signal. This trigger signal S4 is generated in synchronization with the timing of the wavelength scanning driving signal (the timing of generation of the signal S3) at which, for example, the driving current of the laser element 204e is made zero.

Next, concentration measurement operation of the signal processing circuit 208B of the second example is explained.

Similarly to the above, the temperature of the laser element 204e is adjusted by controlling the current in the Peltier element 204g using the temperature control portion 204d, such that the gas for measurement can be measured at the center portion of the wavelength scanning driving signal S2.

Then the laser element 204e is driven, laser light is emitted into the space within the walls 101a, 101b in which exists the gas for measurement, and condensed light is made incident on the light-receiving portion 207.

In the signal processing circuit 208B, when there is no absorption of laser light by the gas for measurement, a frequency-doubled signal is not detected by the synchronous detection circuit 208b, and so the output of the synchronous detection circuit 208b is substantially linear.

When there is laser light absorption by the gas for measurement, a frequency-doubled signal is detected by the synchronous detection circuit 208b.

Fig. 8 is a waveform diagram showing the output signal Sb of the synchronous detection circuit 208b, together with the output signal Sa of the I/V converter 208a. In Fig. 8, the portion surrounded by the dashed line is the gas absorption waveform A.

Here, when for some reason there is an offset in the output signal Sb of the synchronous detection circuit 208b, the original output signal $Sb_0$ appears as the signal $Sb_1$, as shown in Fig. 9. As a result, an error occurs in detection of the maximum value or the minimum value, or the waveform integrated value of the gas absorption waveform A in Fig. 8, and there is the concern that the gas concentration cannot be accurately detected.

Hence in this embodiment, the following method is used in order to detect the gas concentration with greater precision and stability.

That is, the computation portion 208e in Fig. 6 detects the maximum value C and the minimum values B and D therebefore and thereafter in the gas absorption waveform A shown in Fig. 8, and computes the gas concentration using either equation (1) or equation (2) below. In equations (1) and (2), $\alpha$ is a gas concentration conversion coefficient.

$$\text{gas concentration} = \alpha \times |B-C| \quad (1)$$

$$\text{gas concentration} = \alpha \times |C-D| \quad (2)$$

As explained above, when there exists no gas for measurement, a frequency-doubled signal is not detected by the synchronous detection circuit 208b, and the output of the synchronous detection circuit 208b is substantially linear.

However, various noise exists, and so even supposing a case in which the gas for measurement does not exist, the output signal Sb of the synchronous detection circuit 208b is a waveform with concavities and convexities, as shown in Fig. 10. In the case of such a waveform, if a method is used in which the waveform maximum and minimum values alone are simply detected, there is the concern that concave and convex portions due to noise may be erroneously regarded as an absorption waveform, and that maximum and minimum values may be erroneously detected. Further, even in a case in which the integrated value of a waveform is determined, there is similarly the possibility of erroneous detection.

In particular, when the gas for measurement is at a low concentration, the above concave and convex portions become a major source of error in gas concentration detection.

Hence in this embodiment, a trigger signal S4 output from the wavelength scanning driving signal generation portion 204a is used to specify the position at which the maximum value or minimum values of the gas absorption waveform should exist, so that concave or convex portions due to noise are not erroneously detected as a gas absorption waveform.

The trigger signal S4 is synchronized with one period of the wavelength scanning driving signal, and so there is a constant temporal relationship between this trigger signal S4 and the output signal Sb of the synchronous detection circuit 208b. That is, when the gas for measurement exists, the timing of occurrence of the gas absorption waveform A and the maximum value C and minimum values B and D in Fig. 8 relative to the timing of the trigger signal S4 can be detected in advance with substantial accuracy.

Hence in the computation portion 208e shown in Fig. 6, the timing of occurrence of the maximum value C and minimum values B and D of the gas absorption waveform A relative to the timing of the trigger signal S4 is detected in advance and saved.

And, at the time of measurement of gas concentration, the maximum value and minimum values are measured from the output signal Sb of the synchronous detection circuit 208b (output signal of the filter 208d) at the timing of occurrence of the maximum value C and minimum values B and D, taking as reference the trigger signal S4 received from the wavelength scanning driving signal generation portion 204a.

The gas concentration conversion coefficient $\alpha$ is multiplied by the maximum value and minimum values to compute the gas concentration. The gas concentration conversion coefficient $\alpha$ is a coefficient determined by calibration in advance using gas the measured gas component concentration of which is known, and converts the above-described synchronous detection circuit output into a gas concentration.

For example, when a zero gas the measured gas component concentration of which is zero ppm, such as for example nitrogen gas or similar, and a span calibration gas the measured gas component concentration of which is the maximum concentration of the desired measurement range, are passed in alternation, the actual measured values of the zero gas and the span calibration gas are taken to be a first calibration point and a second calibration point, and the straight line connecting these two points is taken to be the reference calibration curve.

This calibration curve is the voltage output determined for "B-C" and "C-D" on the vertical axis, with the horizontal axis indicating the known gas concentration. The slope of this reference calibration curve is the gas concentration conversion coefficient $\alpha$.

From this, even in the case of low concentrations, with the concentration of the gas for measurement is boundlessly close to zero, the computation portion 208e can accurately detect the gas absorption waveform A and the maximum value C and minimum values B and D based on the trigger signal S4, and can perform measurements. Hence the gas concentration can be computed precisely using the above-described equation (1) or equation (2), without being affected by concave or convex portions in the waveform caused by noise.

In this aspect as described above, by scanning the emission wavelength of the laser element 204e in the light source portion 204 over a prescribed range, the absorption wavelength of the gas for measurement can be detected without using a reference gas cell.

In the prior art, only the amplitude of the light reception signal at a specific absorption wavelength of the gas for measurement is detected. On the other hand, in this aspect the entirety of the gas absorption waveform is detected, so that there is no longer a need to fix the emission wavelength of the laser element, and consequently detection sensitivity is stabilized and measurement precision is improved.

Further, by configuring the signal processing circuit 208B as shown in Fig. 6, more accurate gas concentration measurement can be performed compared with cases in which only the maximum value and minimum values, or the integrated value of the gas absorption spectrum is detected.

Next, Fig. 11 shows the configuration of a third example, outside the scope of the present invention, of the signal processing circuit 208; the symbol 208C is assigned to this signal processing circuit of the third embodiment. The same symbols are assigned to the same constituent elements in Fig. 4 and Fig. 6, with redundant explanations omitted, and the following explanation centers mainly on differences.

In Fig. 11, the output of the light-receiving portion 207 is the current signal; this current signal is converted into a voltage signal by the I/V converter 208a. This voltage signal is here called the light reception signal, examples of waveforms of which appears in Fig. 12A and Fig. 12B.

Fig. 12A is a light reception signal waveform for a clean space with no dust in the measurement environment; Fig. 12B is a light reception signal for a space in which dust exists. As is clear from these figures, when dust exists the laser light is blocked, so that the quantity of light received (the light reception signal level) declines.

As explained above, only the amplitude of the frequency-doubled component of the modulated signal of the emitted light is extracted by the synchronous detection circuit 208b. When for example synchronous detection of the light reception signals shown in Fig. 12A and Fig. 12B is performed, waveforms such as those shown in Fig. 13A and Fig. 13B respectively are obtained.

In Fig. 13A, A is similarly the gas absorption waveform, and by detecting the amplitude w of this waveform (= $w_a$), the gas concentration can be measured.

On the other hand, in Fig. 13B, for a case in which dust exists, the amplitude w (= $w_b$) corresponding to Fig. 12B is also smaller.

In this way, the amplitude of the gas absorption waveform fluctuates depending on the quantity of light received, and in an environment in which the dust quantity fluctuates in particular, accurate gas concentration measurement is difficult.

Hence in this aspect, as shown in Fig. 14, focusing on the substantially proportional relationship between the level of the quantity of light received and the amplitude level of the gas absorption waveform as shown in Fig. 14, the amplitude of the gas absorption waveform is corrected in the computation portion 208e, enabling accurate detection of the gas concentration even in an environment in which dust or similar exists.

That is, as shown in Fig. 11, the light reception signal output from the I/V converter 208a is input to the filter 208f used as extraction means, and the wavelength scanning driving signal component is obtained. The computation portion 208e then computes the ratio of the wavelength scanning driving signal component to a light reception quantity setting value as a light reception quantity correction coefficient $\beta$, and the amplitude of the gas absorption waveform output from the filter 208d is corrected using this correction coefficient $\beta$.

For example, when the light reception signals shown in Fig. 12A and Fig. 12B are input to the filter 208f and wavelength scanning driving signal components are obtained, waveforms such as those in Fig. 15A and Fig. 15B are obtained. Fig. 15A is a case in which there is no dust and the light reception quantity is not reduced, and Fig. 15B is an case in which there is dust and the light reception quantity is reduced.

As shown in Fig. 15A, at a certain time the level P of the light reception signal (wavelength scanning driving signal output from the filter 208f) when there is no dust and the light reception quantity is maximum (= $P_{max}$) is stored in the computation portion 208e in advance as the light reception quantity setting value. The computation portion 208e detects the light reception signal level P when there is dust, as in Fig. 15A, and uses the light reception quantity correction coefficient $\beta$ to compute the ratio of this P to the $P_{max}$ at the same time from equation (3).

$$\beta = P_{max}/P \quad (3)$$

The above correction coefficient β can be multiplied or divided by the amplitude w of the gas absorption waveform (for example, $w_b$ in Fig. 13B) to obtain the amplitude $w_h$ corrected for fluctuations in the light reception quantity arising from dust, as in equation (4).

$$w_h = w \times \beta \quad (4)$$

Thus by using the corrected amplitude $w_h$ of the gas absorption waveform to measure the gas concentration, even when the reduction in light reception quantity is considerable in an environment with large amounts of dust such as in a flue, the gas concentration can be accurately measured.

By means of this invention, there are the advantageous results that a reference gas cell becomes unnecessary, so that the device configuration can be simplified and costs can be reduced, and in addition there is no need to fix the emission wavelength of the laser element, so that detection sensitivity is stabilized, and measurement precision is improved.

Further, even in an environment with much dust there is no need to separately use a dust meter or other instrument, and a light reception quantity correction coefficient can be used to correct the amplitude of the gas absorption waveform, enabling accurate measurement of the gas concentration.

## Claims

**1.** A laser gas analyzer, comprising
a light source portion (204) which emits frequency-modulated laser light,
a first optical system (205) which collimates light emitted from the light source portion (204),
a second optical system (206) which condenses transmitted light which has propagated from the first optical system (205) via a space in which gas for measurement exists,
a light-receiving portion (207) which receives light condensed by the second optical system (206), and a signal processing circuit (208) which processes an output signal of the light-receiving portion (207),
wherein the light source portion comprises:

a laser driving signal generation portion (204s) configured to combine a wavelength scanning driving signal (S2) that varies the emission wavelength of a laser element so as to scan the absorption wavelength of the gas for measurement and a high-frequency modulation signal to modulate the emission wavelength, and
to output
the result as a laser driving signal;
a current control portion (204c) which converts the laser driving signal output from the laser driving signal generation portion (204s)into a current; and
the laser element to which the current output from the current control portion (204c) is supplied; wherein the signal processing circuit (208) is configured to detect, from the output signal of the light-receiving portion (207), a signal of a component at twice the frequency of the modulation signal modulating the emission wavelength, and measure the concentration of the gas for measurement; and wherein

the signal processing circuit (208) comprises:

a synchronous detection circuit (208b) which detects the amplitude of the signal of the frequency-doubled component from the output signal of the light-receiving portion (207) ; and
a computation portion (208e) configured to determine the concentration of the gas for measurement from the difference between a maximum value and a minimum value of a gas absorption waveform existing in the output signal (Sb) of this synchronous detection circuit (208b),
**characterized in that**
the computation portion (208e) is further configured that for the determination of the concentration of the gas for measurement the timing of a pulse-shape trigger signal (S4) synchronized with the wavelength scanning driving signal (S2) and output from the laser driving signal generation portion is taken as reference, and the expected timing of occurrence of the maximum value (C) and the minimum value (B,D) of the gas absorption waveform relative to the timing of the pulse-shape trigger signal (S4) is determined in advance and saved, and

at the time of measurement of gas concentration, the maximum value (C) and minimum value (B,D) are measured from the output signal (Sb) of the synchronous detection circuit (208b) at the expected timing of occurrence of the maximum value (C) and minimum value (B,D).

**2.** The laser gas analyzer according to Claim 1, **characterized in that** the trigger signal is synchronized with the timing of the wavelength scanning driving signal at which the driving current of the laser element is made zero.

## Patentansprüche

**1.** Lasergasanalysator, umfassend
einen Lichtquellenteil (204), der frequenzmoduliertes Laserlicht aussendet,
ein erstes optisches System (205), das von dem Lichtquellenteil (204) ausgesendetes Licht kollimiert,
ein zweites optisches System (206), das ausgesendetes Licht verdichtet, das sich von dem ersten optischen System (205) über einen Raum, in dem Messgas existiert, ausgebreitet hat,
einen Lichtempfangsteil (207), der durch das zweite optische System (206) verdichtetes Licht empfängt, und eine Signalverarbeitungsschaltung (208), die ein Ausgangssignal des Lichtempfangsteils (207) verarbeitet,
wobei der Lichtquellenteil umfasst:

einen Laseransteuersignalerzeugungsteil (204s), der konfiguriert ist, ein Wellenlängenscanningansteuersignal (S2), das die Emissionswellenlänge eines Laserelements variiert, um die Absorptionswellenlänge des Messgases zu scannen, und ein hochfrequentes Modulationssignal, um die Emissionswellenlänge zu modulieren, zu kombinieren und das Ergebnis als ein Laseransteuersignal auszugeben;
einen Stromsteuerteil (204c), der den Laseransteuersignalausgang von dem Laseransteuersignalerzeugungsteil (204s) in einen Strom umwandelt; und
das Laserelement, an das die Stromausgabe von dem Stromsteuerteil (204c) bereitgestellt wird; wobei
die Signalverarbeitungsschaltung (208) konfiguriert ist, von dem Ausgangssignal des Lichtempfangsteils (207) ein Signal einer Komponente bei der doppelten Frequenz des Modulationssignals, das die Emissionswellenlänge moduliert, zu detektieren und die Konzentration des Messgases zu messen; und wobei

die Signalverarbeitungsschaltung (208) umfasst:

eine synchrone Detektionsschaltung (208b), welche die Amplitude des Signals der frequenzverdoppelten Komponente von dem Ausgangssignal des Lichtempfangsteils (207) detektiert; und
einen Berechnungsteil (208e), der konfiguriert ist, die Konzentration des Messgases aus der Differenz zwischen einem Maximalwert und einem Minimalwert einer Gasabsorptionswellenform, die in dem Ausgangssignal (Sb) dieser synchronen Detektionsschaltung (208b) existiert, zu bestimmen,
**dadurch gekennzeichnet, dass**
der Berechnungsteil (208e) ferner konfiguriert ist, dass zur Bestimmung der Konzentration des Messgases der Zeitpunkt eines Impulsformtriggersignals (S4), das mit dem Wellenlängenscanningansteuersignal (S2) synchronisiert ist und von dem Laseransteuersignalerzeugungsteil ausgegeben wird, als Referenz genommen wird und der erwartete Zeitpunkt des Auftretens des Maximalwerts (C) und des Minimalwerts (B, D) der Gasabsorptionswellenform relativ zu dem Zeitpunkt des Impulsformtriggersignals (S4) im Voraus bestimmt und gespeichert wird und zum Zeitpunkt der Messung der Gaskonzentration der Maximalwert (C) und der Minimalwert (B, D) von dem Ausgangssignal (Sb) der synchronen Detektionsschaltung (208b) zu dem erwarteten Zeitpunkt des Auftretens des Maximalwerts (C) und Minimalwerts (B, D) gemessen werden.

**2.** Lasergasanalysator nach Anspruch 1, **dadurch gekennzeichnet, dass** das Triggersignal mit dem Zeitpunkt des Wellenlängenscanningansteuersignals, zu dem der Ansteuerstrom des Laserelements null gemacht wird, synchronisiert ist.

## Revendications

**1.** Analyseur de gaz laser comprenant :

une partie de source lumineuse (204) qui émet de la lumière laser modulée en fréquence,
un premier système optique (205) qui assure la collimation de lumière émise par la partie de source lumineuse (204),
un deuxième système optique (206) qui condense la lumière transmise qui s'est propagée à partir du premier système optique (205) via un espace dans lequel existe du gaz pour la mesure,
une partie de réception de lumière (207) qui reçoit de la lumière condensée par le deuxième système optique (206), et un circuit de traitement de signal (208) qui traite un signal de sortie de la partie de réception de lumière (207),

dans lequel la partie de source lumineuse comprend :

une partie de génération de signal de commande de laser (204s) configurée pour combiner un signal de commande de balayage de longueur d'onde (S2) qui fait varier la longueur d'onde d'émission d'un élément laser de manière à balayer la longueur d'onde d'absorption du gaz pour la mesure et un signal de modulation haute fréquence pour moduler la longueur d'onde d'émission, et pour faire sortir le résultat à tant que signal de commande de laser ;
une partie de commande de courant (204c) qui convertit le signal de commande de laser, qu'a fait sortir la partie de génération de signal de commande de laser (204s), en un courant ; et
l'élément laser auquel le courant qu'a fait sortir la partie de commande courant (204c) est fourni ;
dans lequel le circuit de traitement de signal (208) est configuré pour détecter, à partir du signal de sortie de la partie de réception de lumière (207), un signal d'une composante à deux fois la fréquence du signal de modulation modulant la longueur d'onde d'émission, et mesurer la concentration du gaz pour la mesure ; et

dans lequel le circuit de traitement de signal (208) comprend :

un signal de détection synchrone (208b) qui détecte l'amplitude du signal de la composante doublée en fréquence à partir du signal de sortie de la partie de réception de lumière (207) ; et
une partie de calcul (208e) configurée pour déterminer la concentration du gaz pour la mesure à partir de la différence entre une valeur maximale et une valeur minimale de la forme d'onde d'absorption de gaz existant dans le signal de sortie (Sb) de ce circuit de détection synchrone (208b),
**caractérisé en ce que**
la partie de calcul (208e) est en outre configurée de sorte que pour la détermination de la concentration du gaz pour la mesure, le minutage d'un signal de déclenchement à forme d'impulsion (S4) synchronisé avec le signal de commande de balayage de longueur d'onde (S2) et qu'a fait sortir la partie de génération de signal de commande de laser est pris en tant que référence, et le minutage d'occurrence attendu de la valeur maximale (C) et la valeur minimale (B, D) de la forme d'onde d'absorption de gaz par rapport au minutage du signal de déclenchement à forme d'impulsion (S4) est déterminé à l'avance et est sauvegardé, et au moment de la mesure de la concentration de gaz, la valeur maximale (C) et la valeur minimale (B, D) sont mesurées à partir du signal de sortie (Sb) du circuit de détection synchrone (208b) selon le minutage attendu d'occurrence de la valeur maximale (C) et de la valeur minimale (B, D).

**2.** Analyseur de gaz laser selon la revendication 1, **caractérisé en ce que** le signal de déclenchement est synchronisé avec le minutage du signal de commande de balayage de longueur d'onde selon lequel le courant de commande de l'élément laser est amené à zéro.

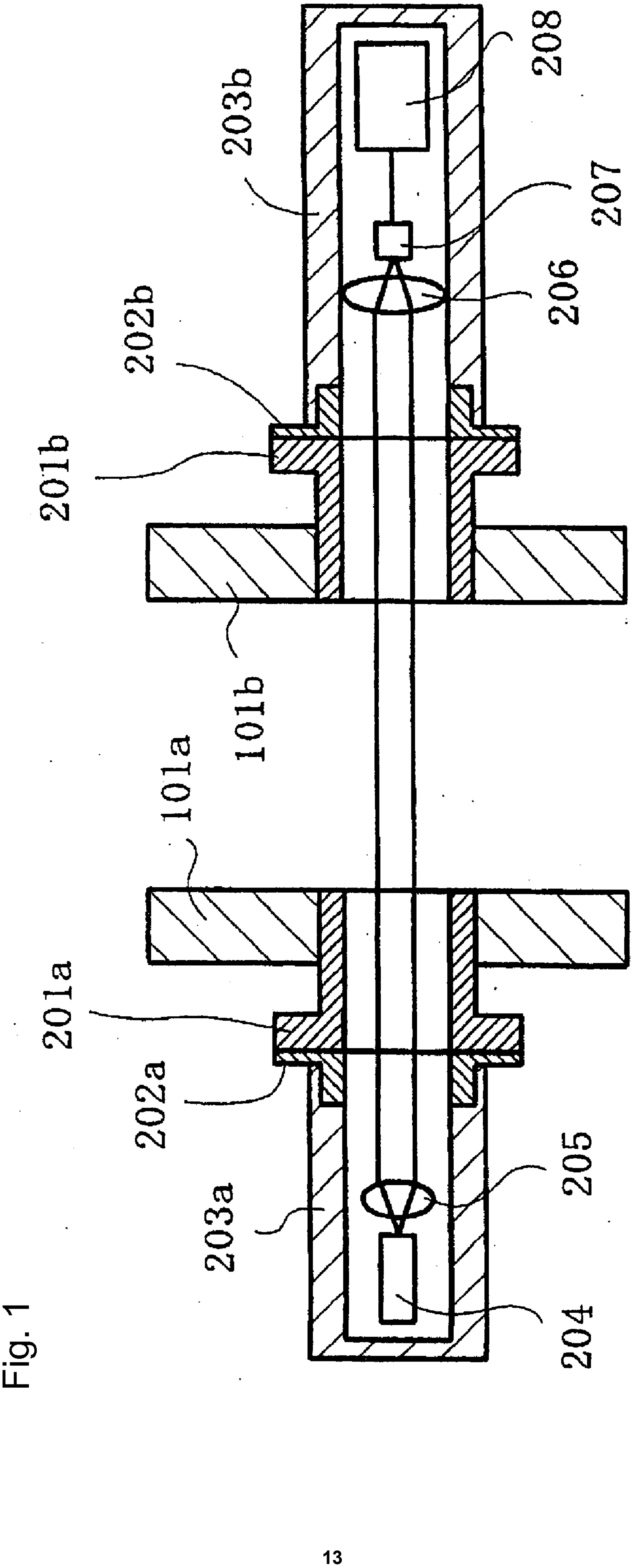


Fig. 1

Fig. 2

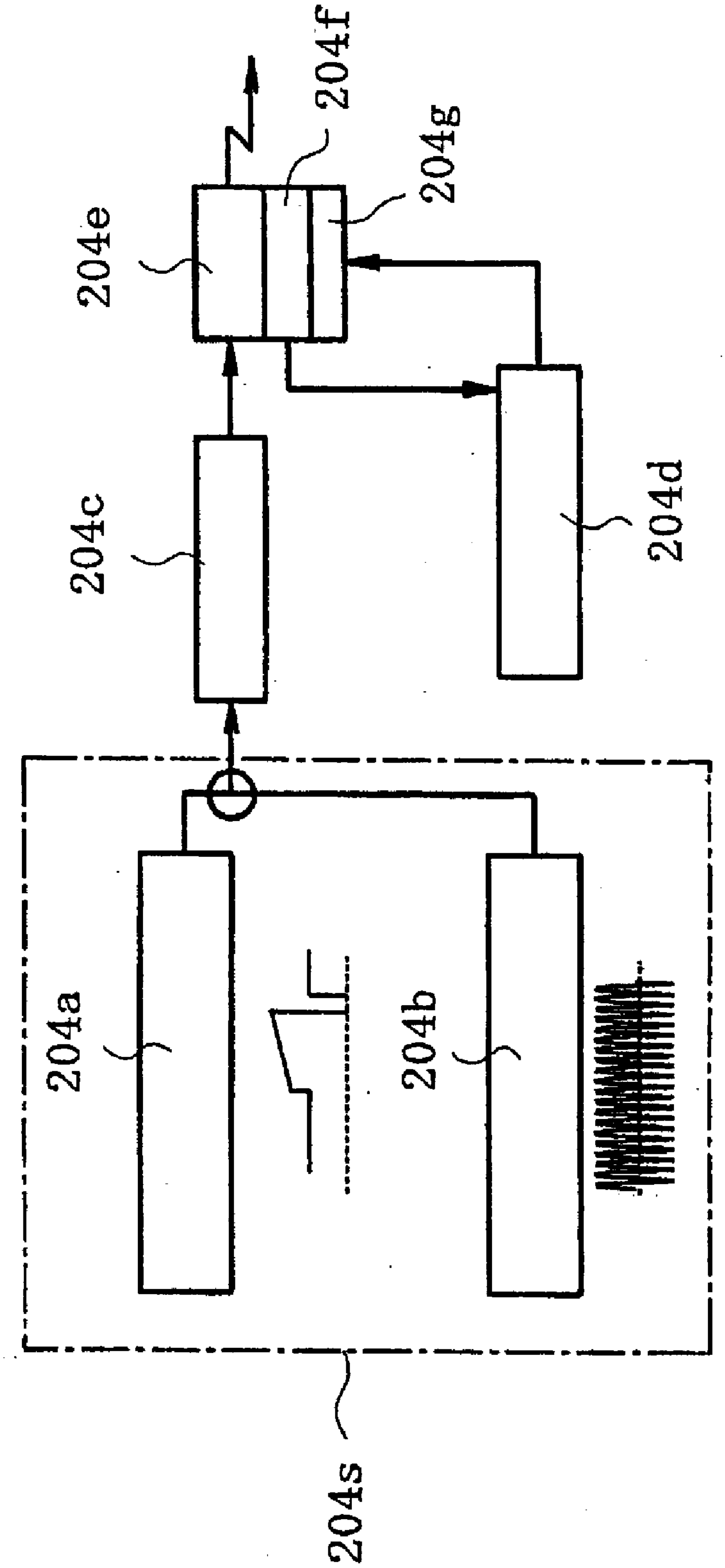

Fig. 3

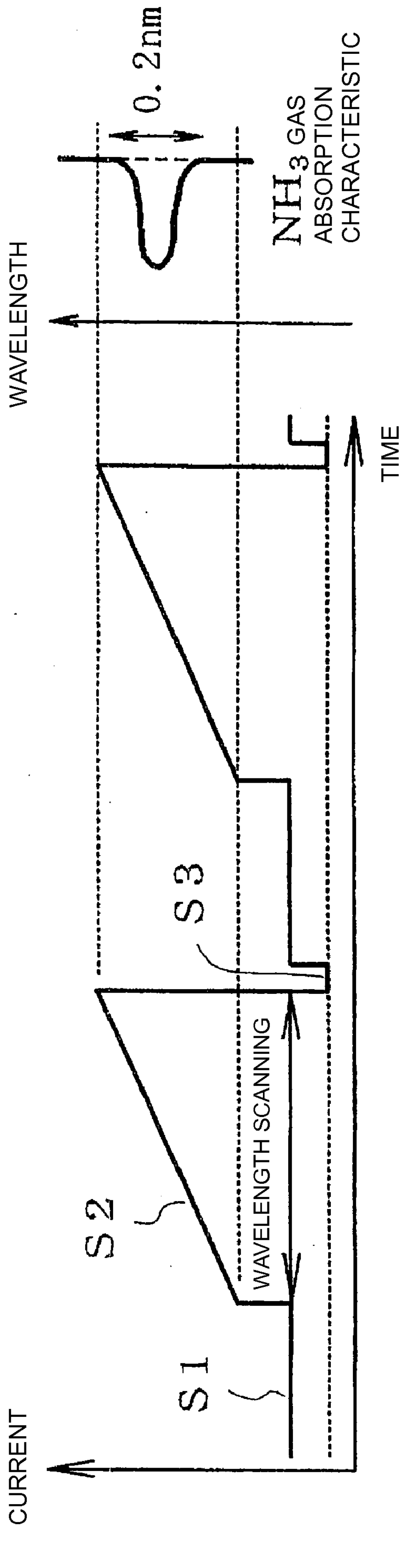
CURRENT
S1
S2
WAVELENGTH SCANNING
S3
TIME
WAVELENGTH
0. 2nm
$NH_3$ GAS
ABSORPTION
CHARACTERISTIC

Fig. 4

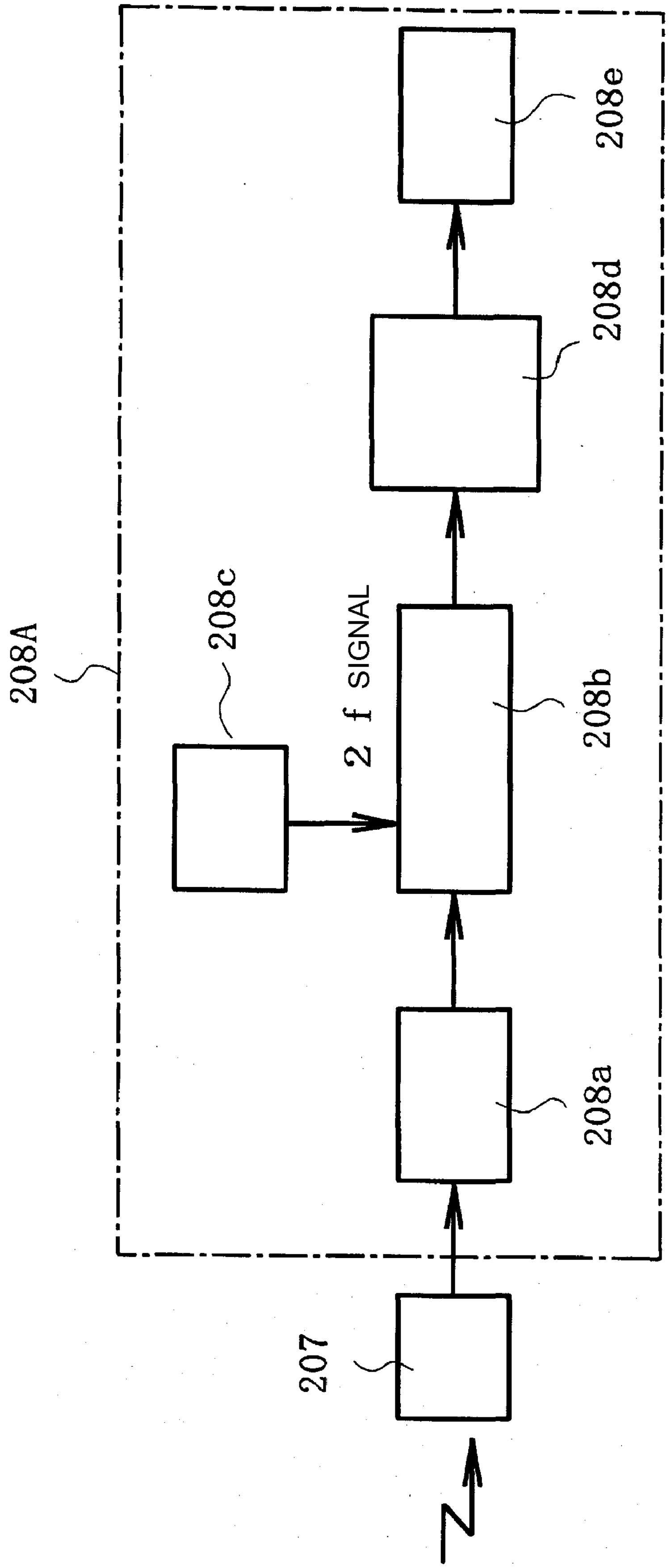

Fig. 5

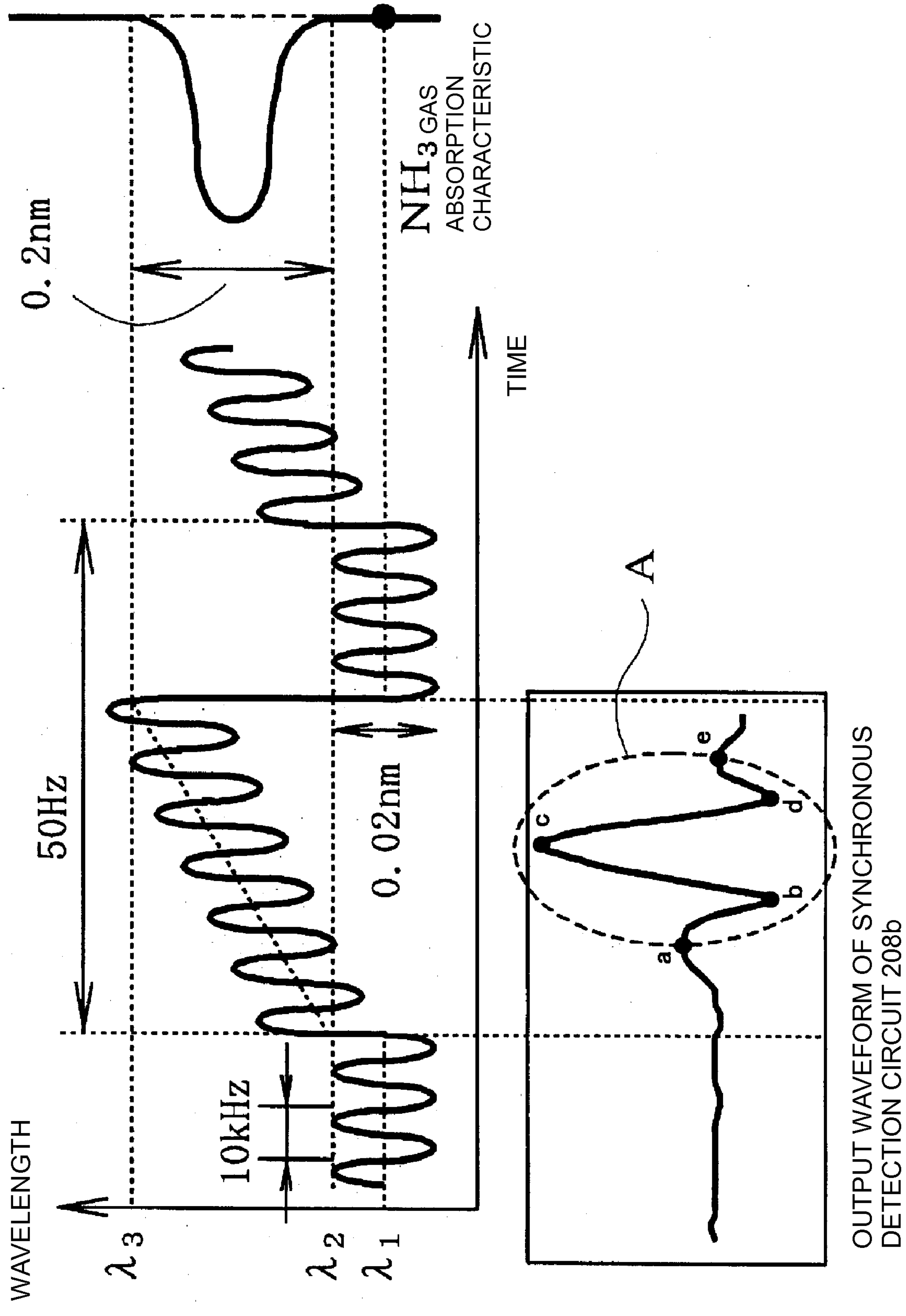
WAVELENGTH
λ 3
λ 2
λ 1
10kHz
50Hz
0. 02nm
0. 2nm
$NH_3$ GAS
ABSORPTION
CHARACTERISTIC
TIME
A
a
b
c
d
e
OUTPUT WAVEFORM OF SYNCHRONOUS
DETECTION CIRCUIT 208b

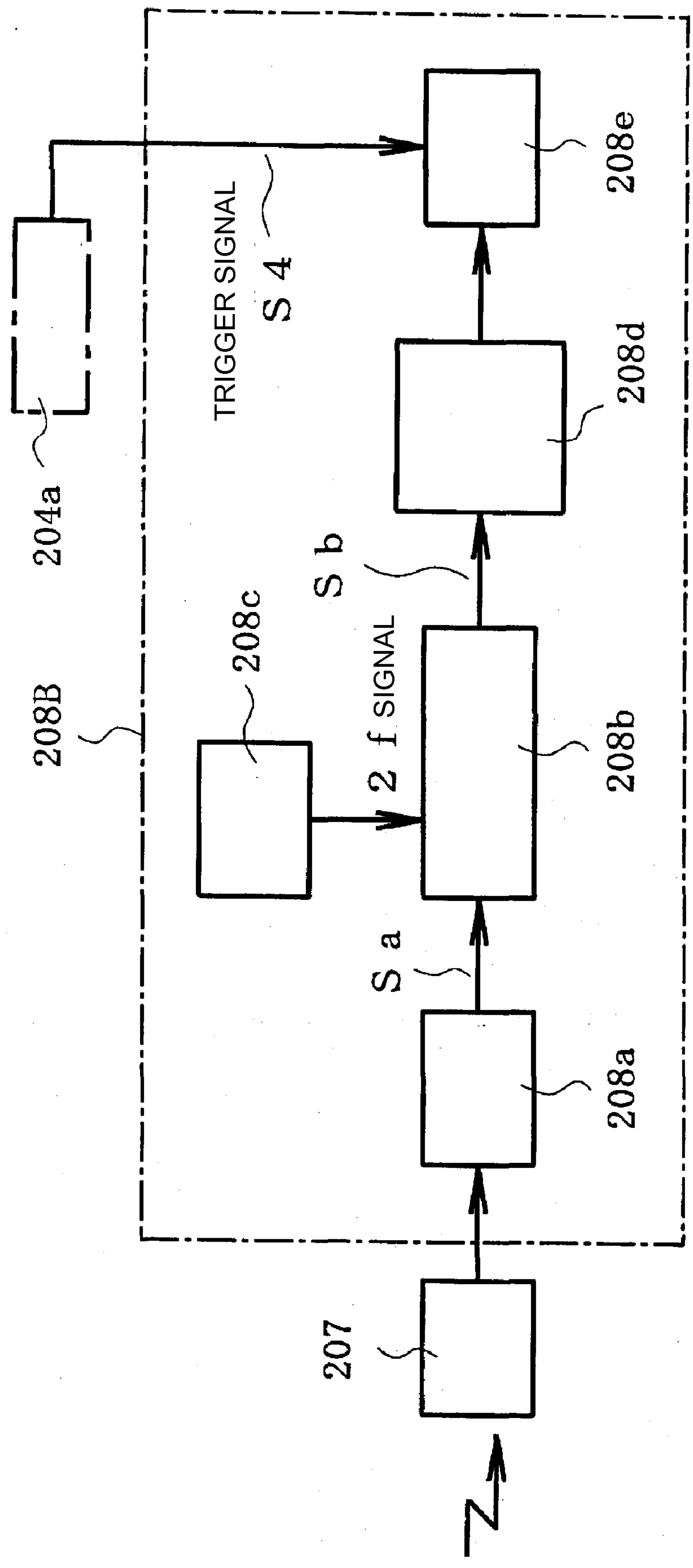
TRIGGER SIGNAL
S 4
208e
208d
204a
S b
208c
208B
2 f SIGNAL
208b
S a
208a
207

Fig. 6

Fig. 7

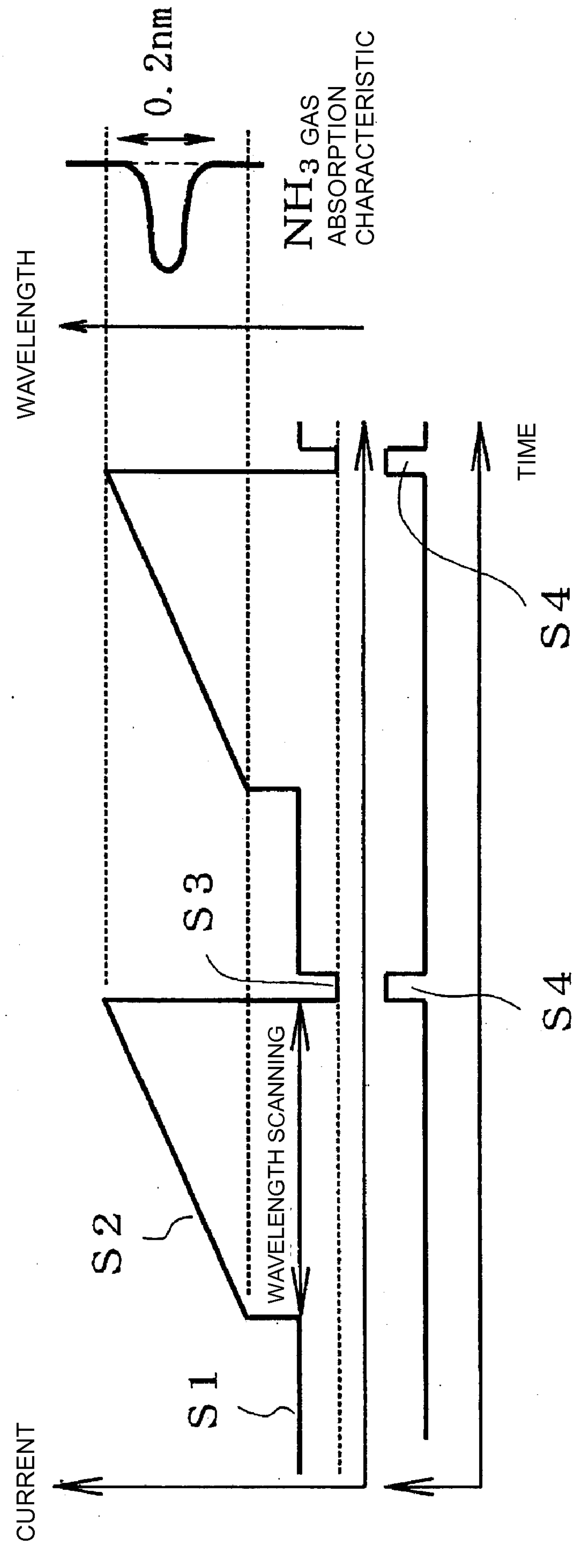
WAVELENGTH
0. 2nm
$NH_3$ GAS ABSORPTION CHARACTERISTIC
CURRENT
S1
S2
WAVELENGTH SCANNING
S3
S4
S4
TIME

Fig. 8

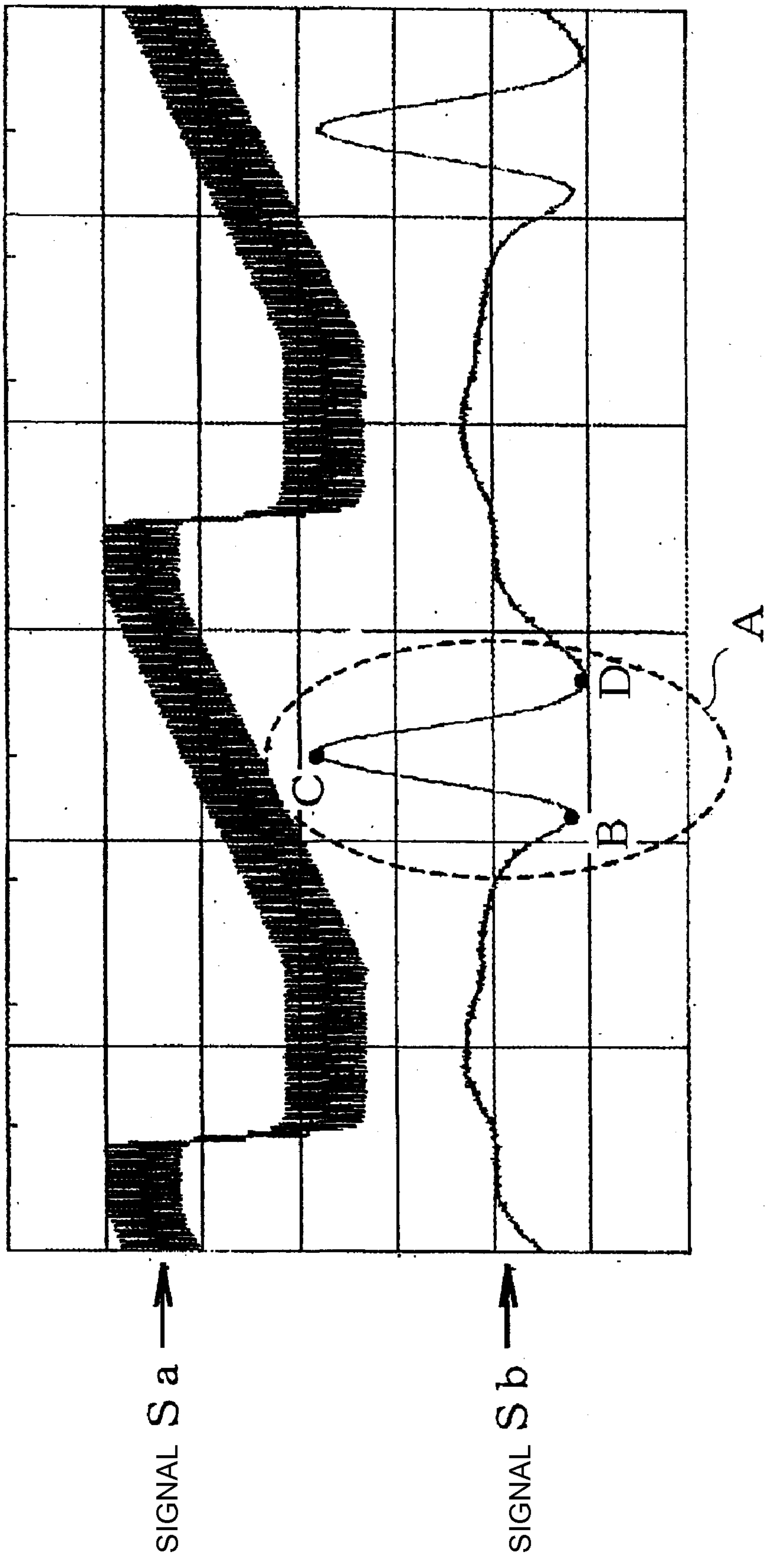

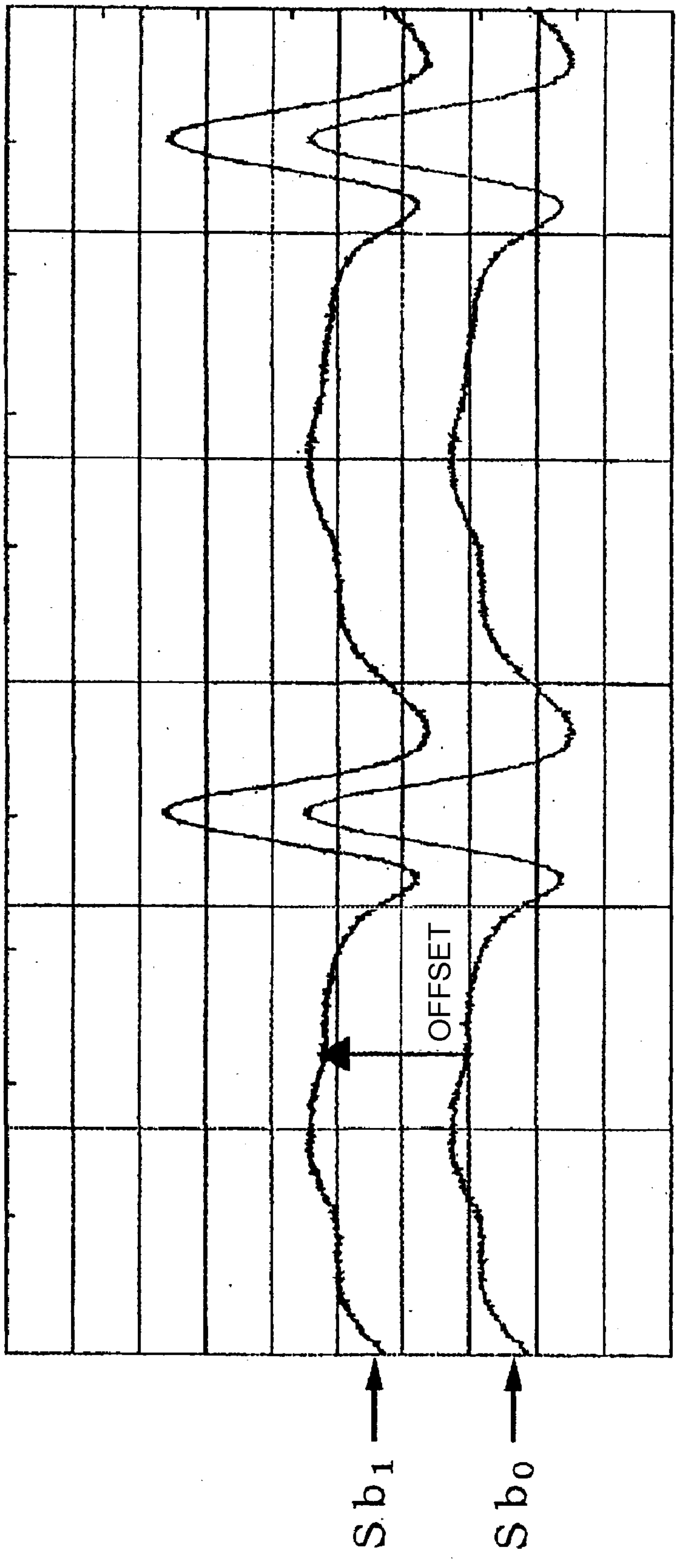


Fig. 9

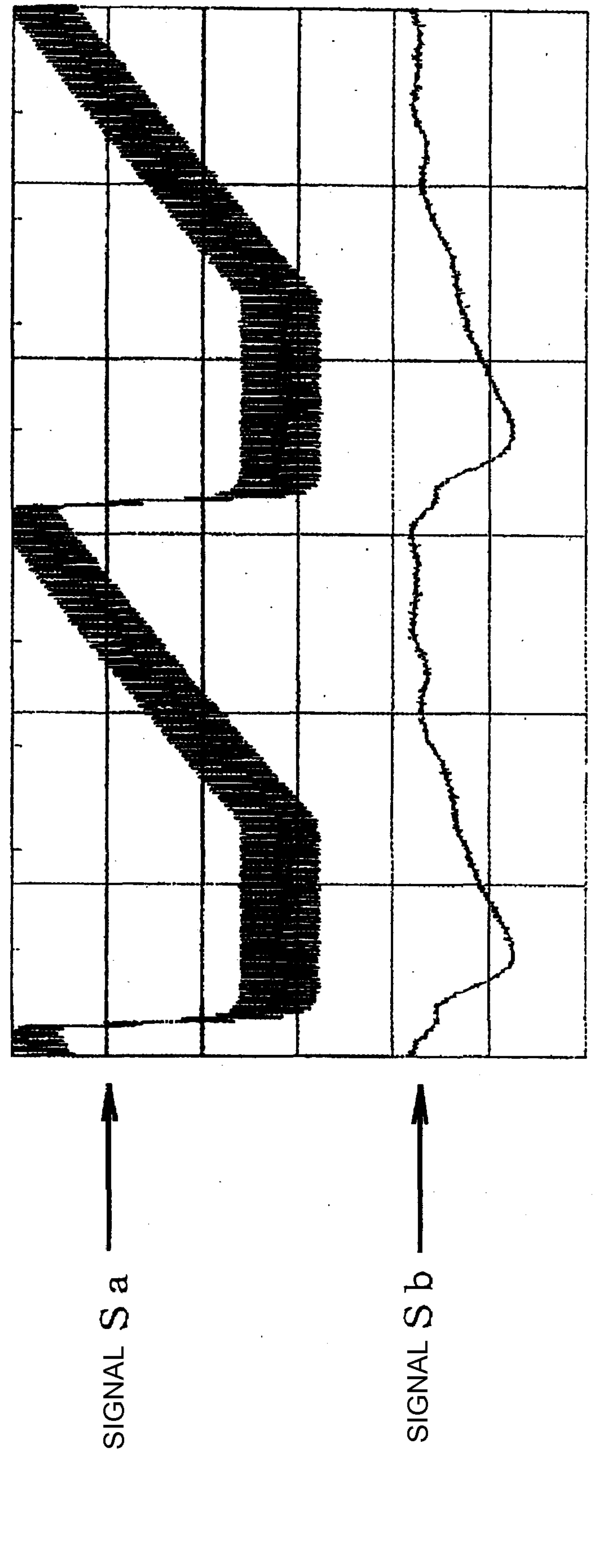


Fig. 10

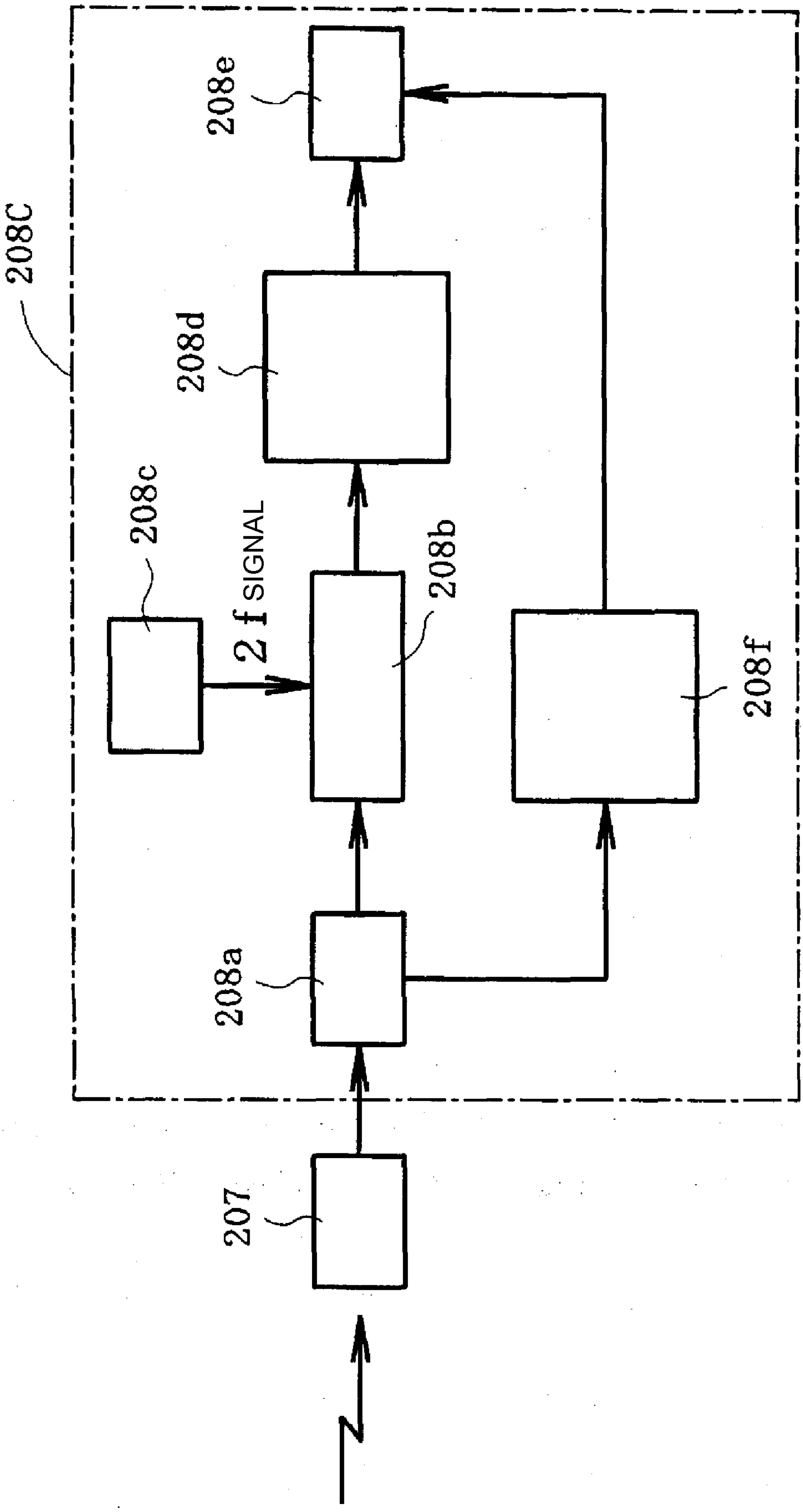


Fig. 11

Fig. 12A

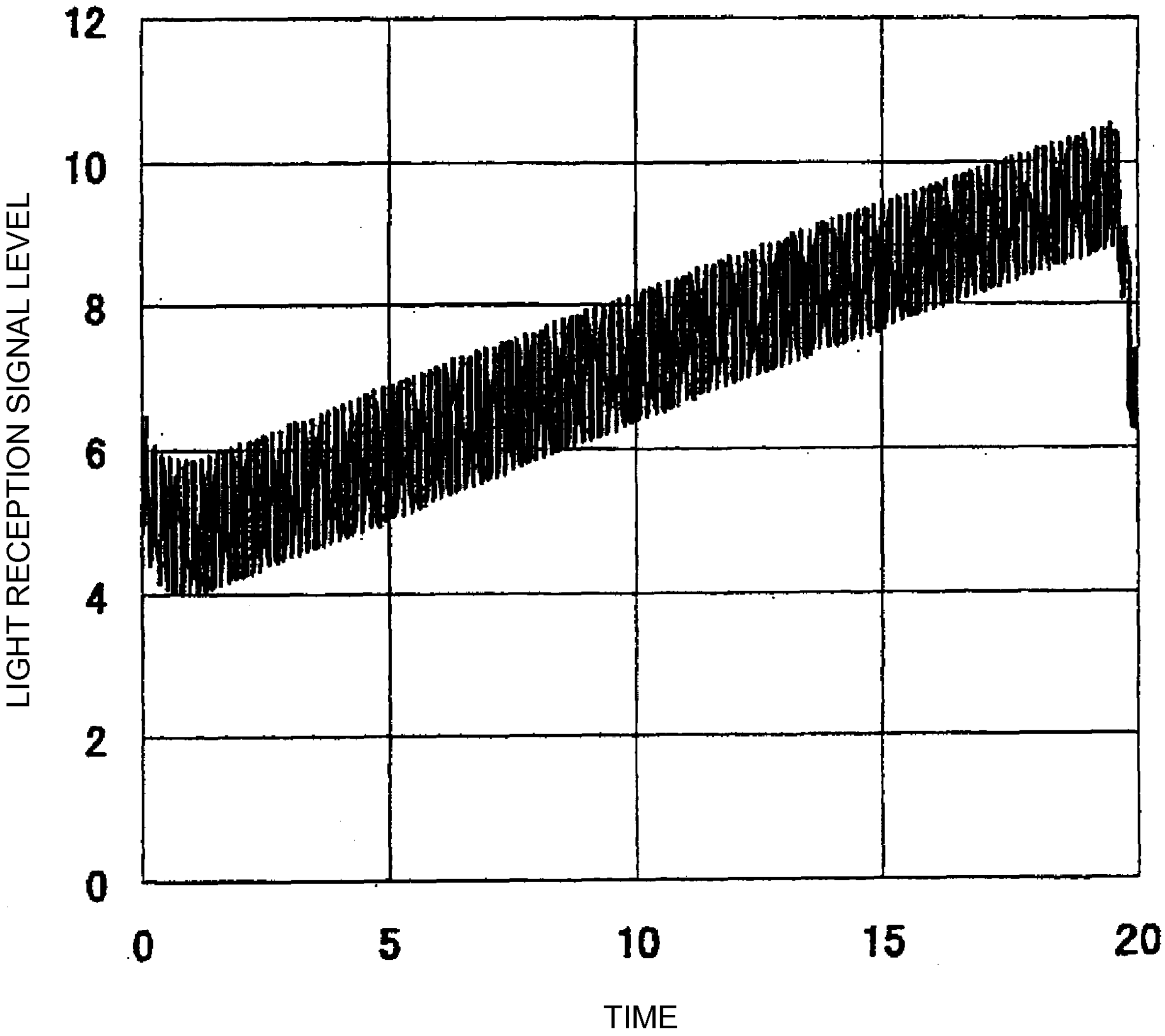

Fig. 12B

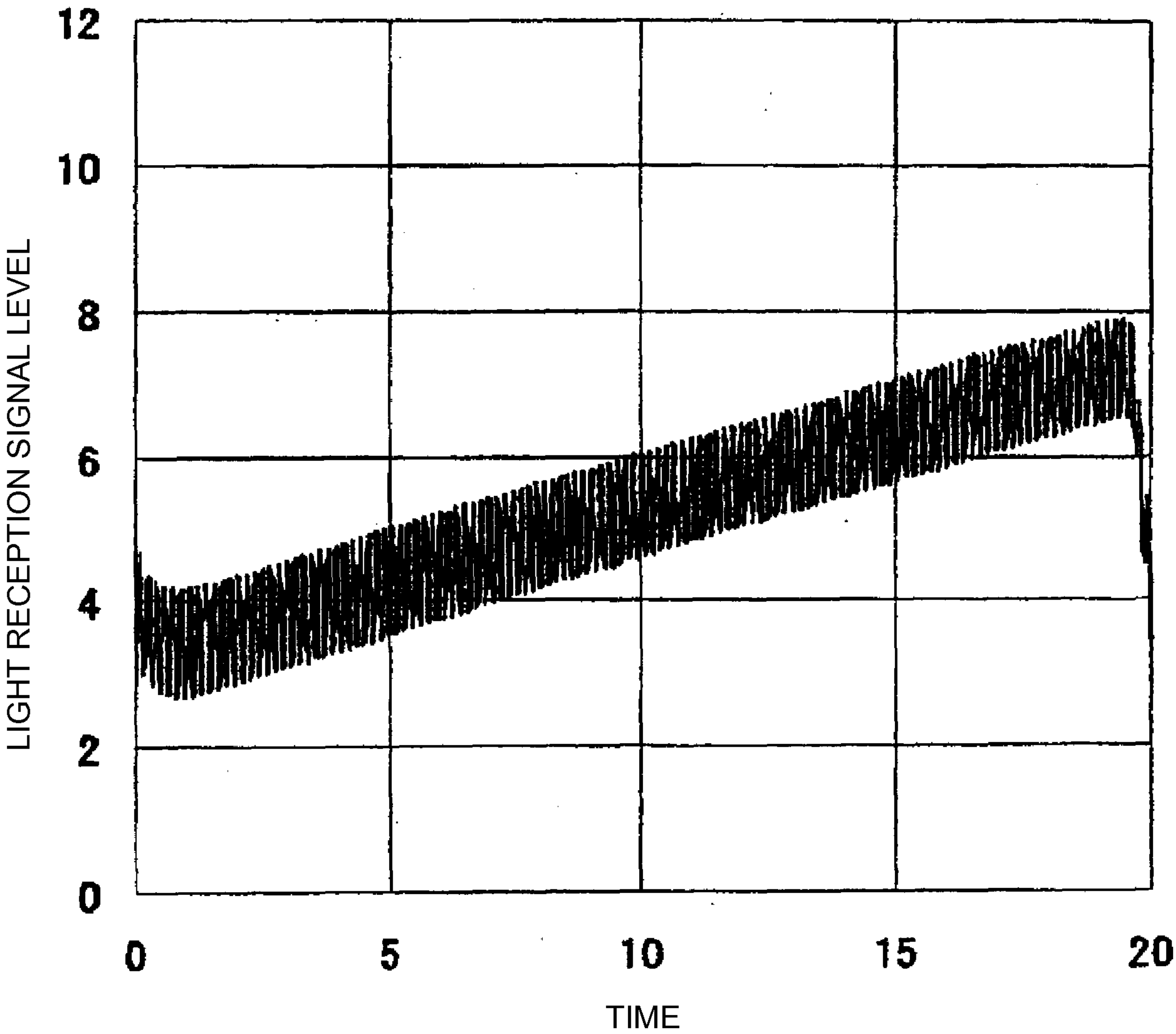

Fig. 13A

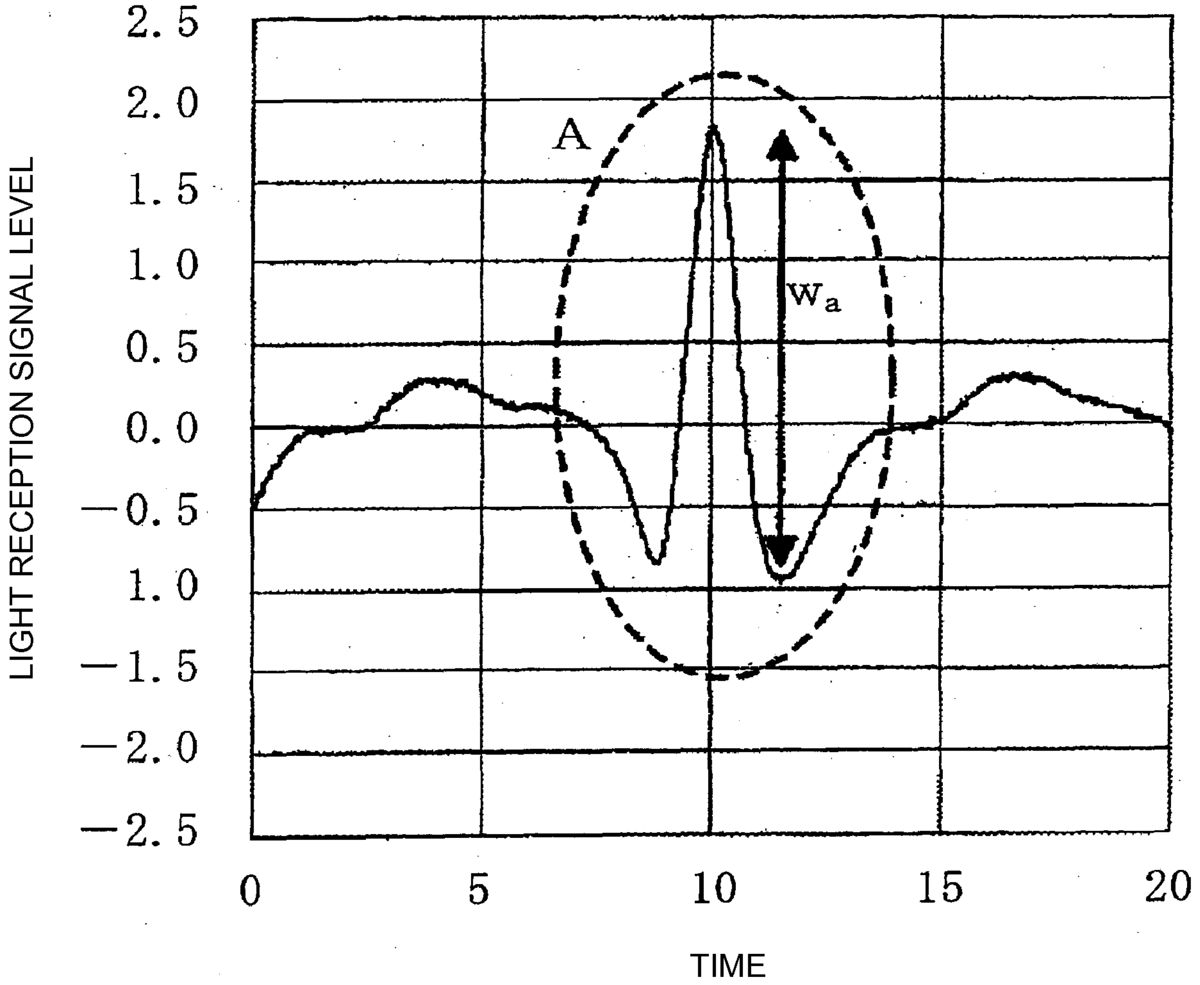
LIGHT RECEPTION SIGNAL LEVEL
2.5
2.0
1.5
1.0
0.5
0.0
−0.5
1.0
−1.5
−2.0
−2.5
0
5
10
15
20
TIME
A
Wa

Fig. 13B

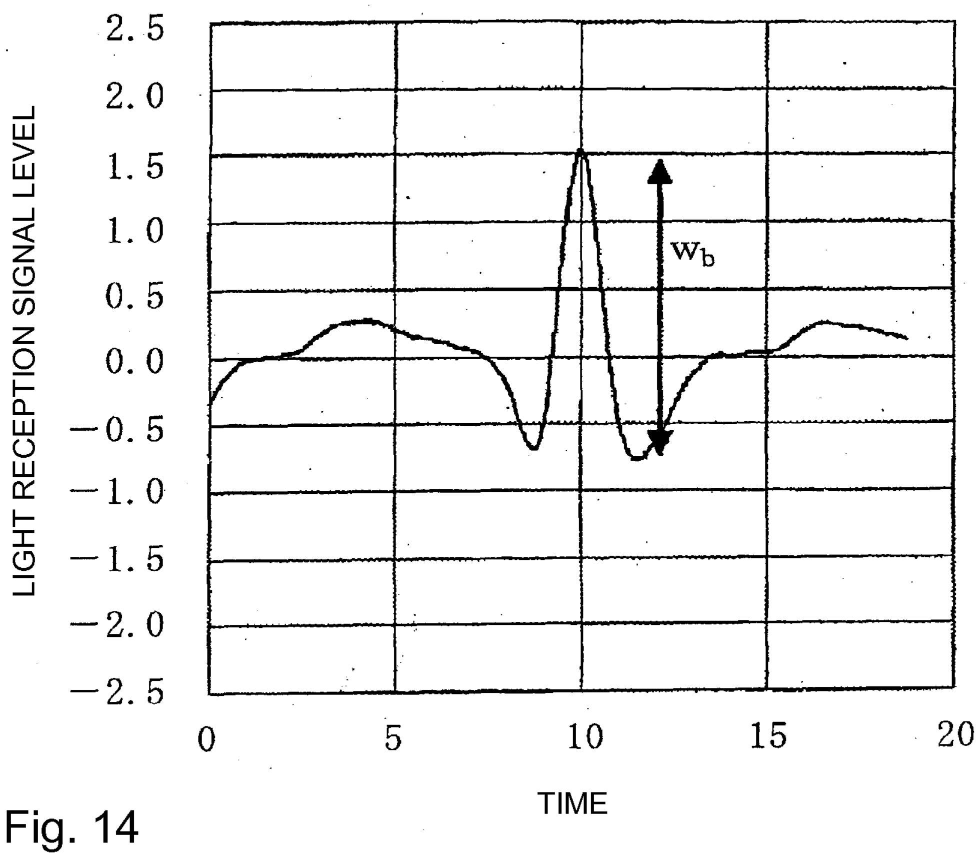


Fig. 14

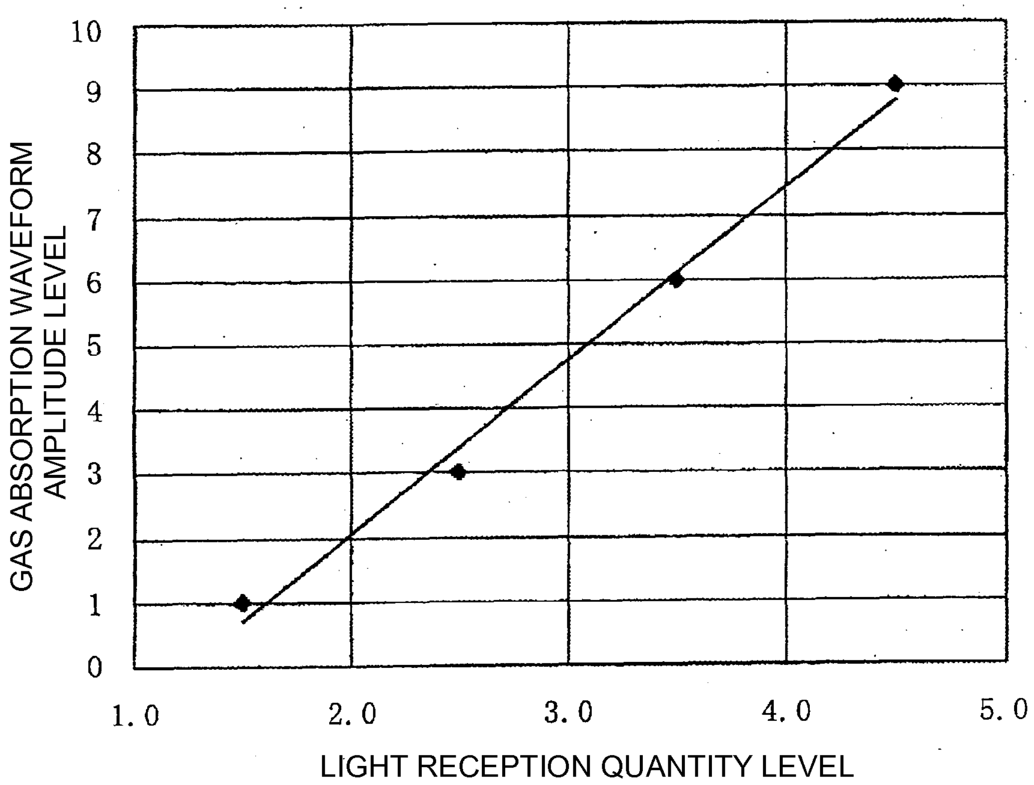

Fig. 15A

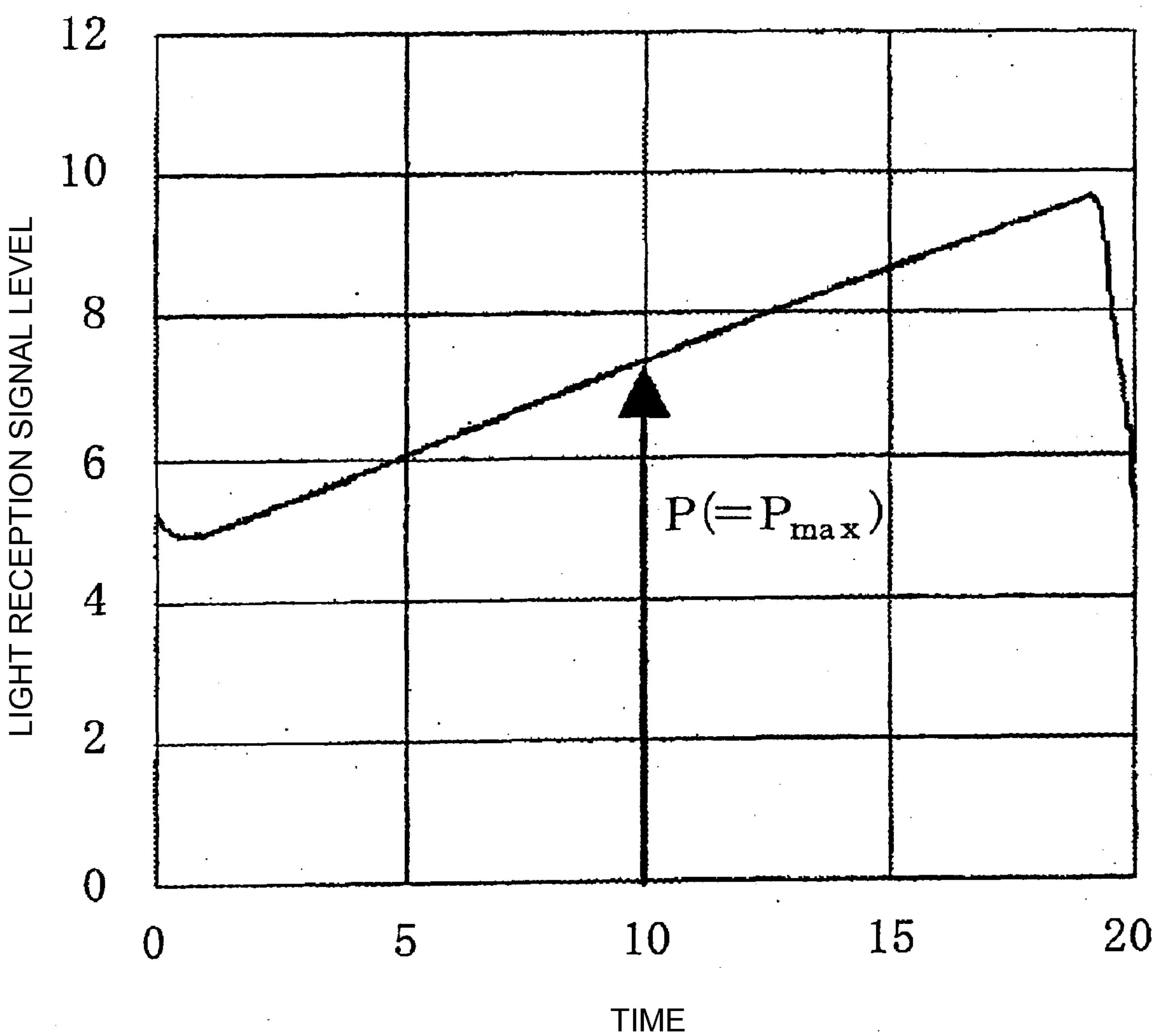
12
10
8
6
4
2
0
LIGHT RECEPTION SIGNAL LEVEL
0
5
10
15
20
TIME
P(=Pmax)

Fig. 15B

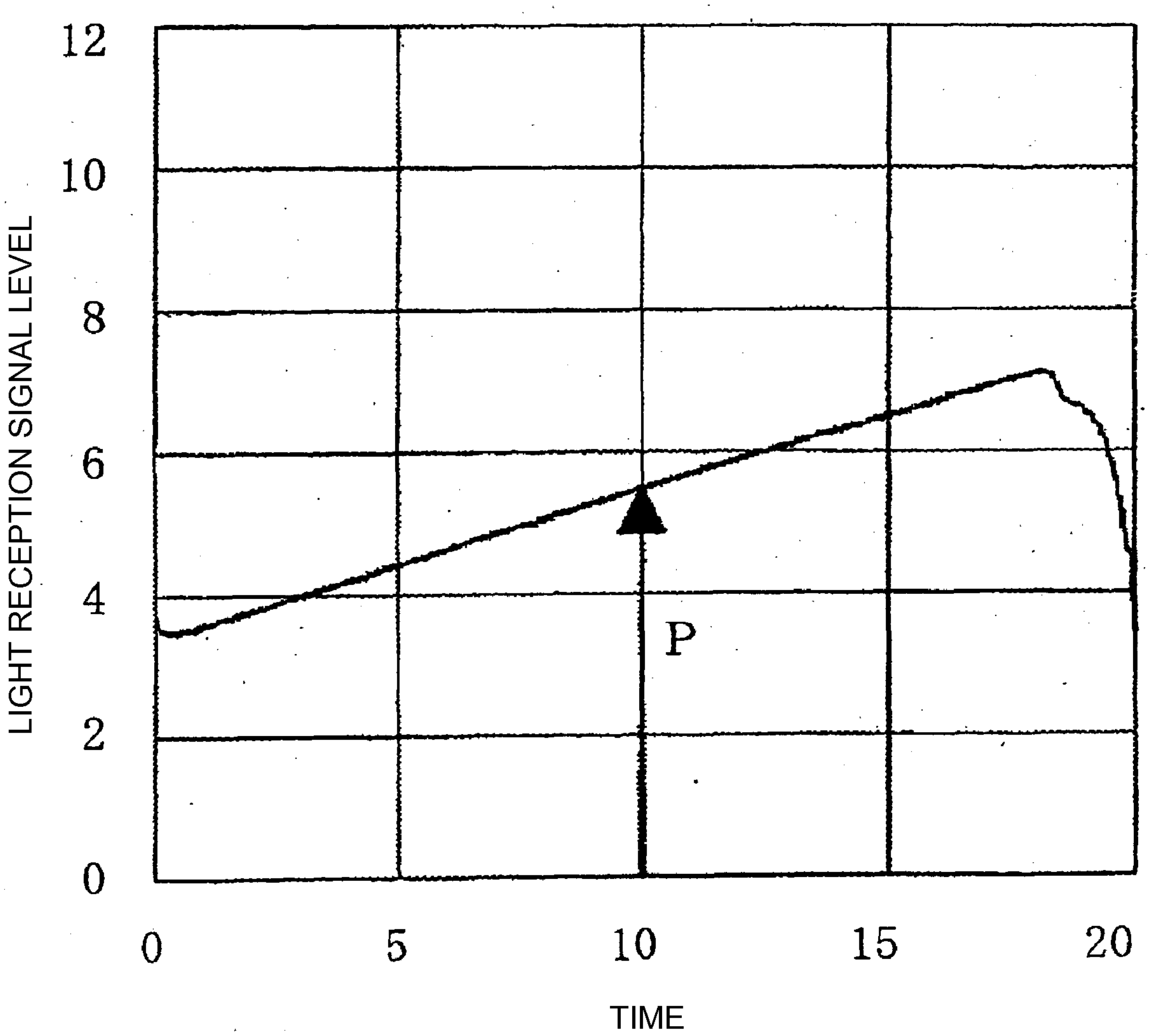

Fig. 16

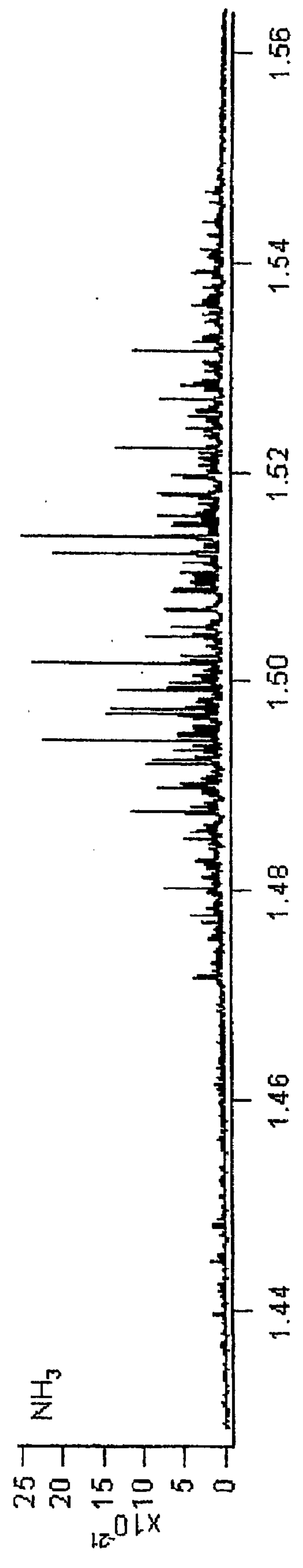

Fig. 17

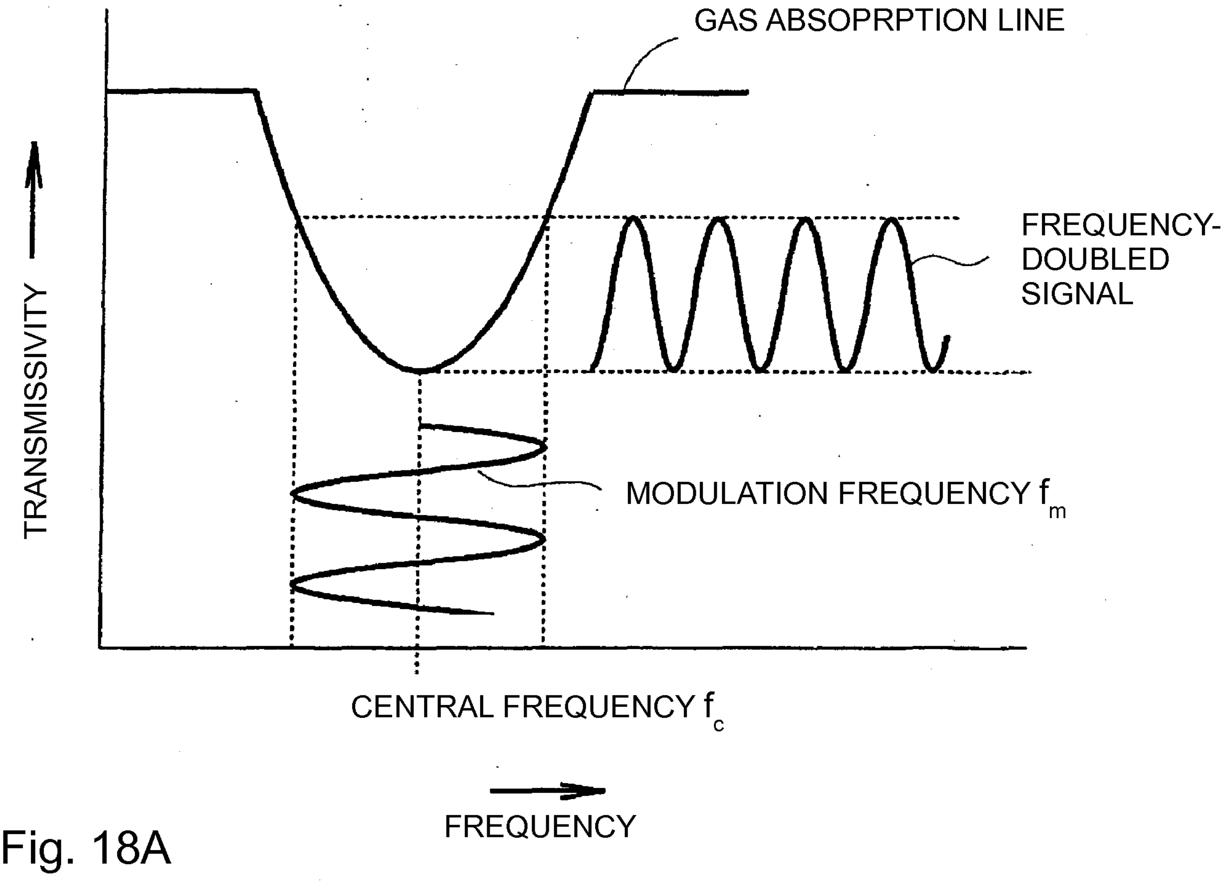


Fig. 18A

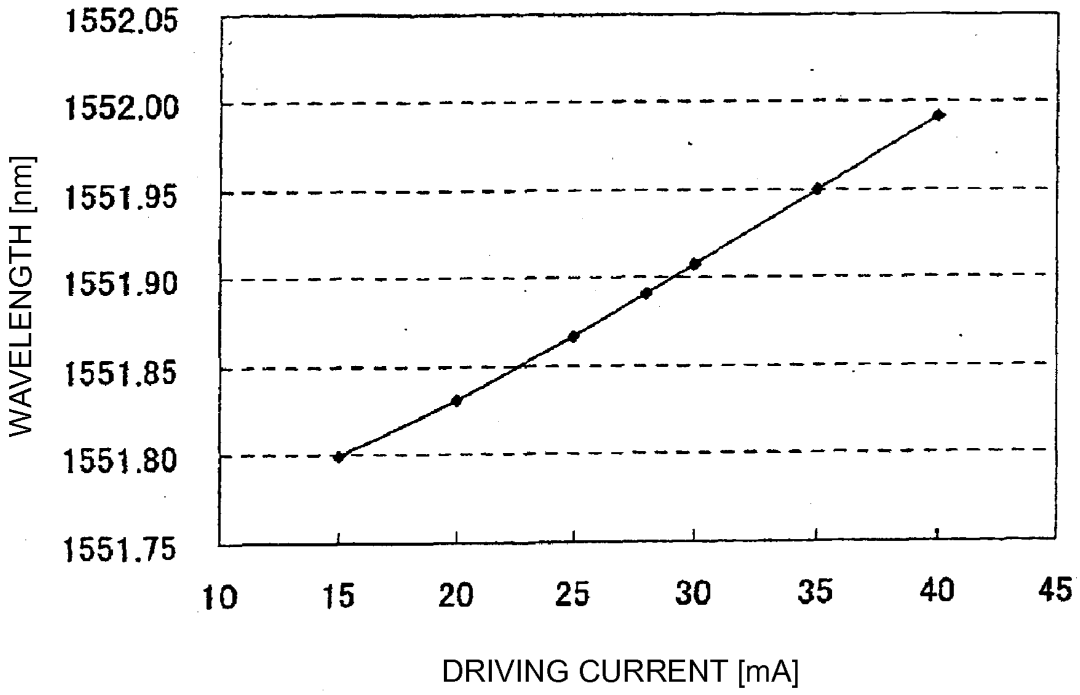

Fig. 18B

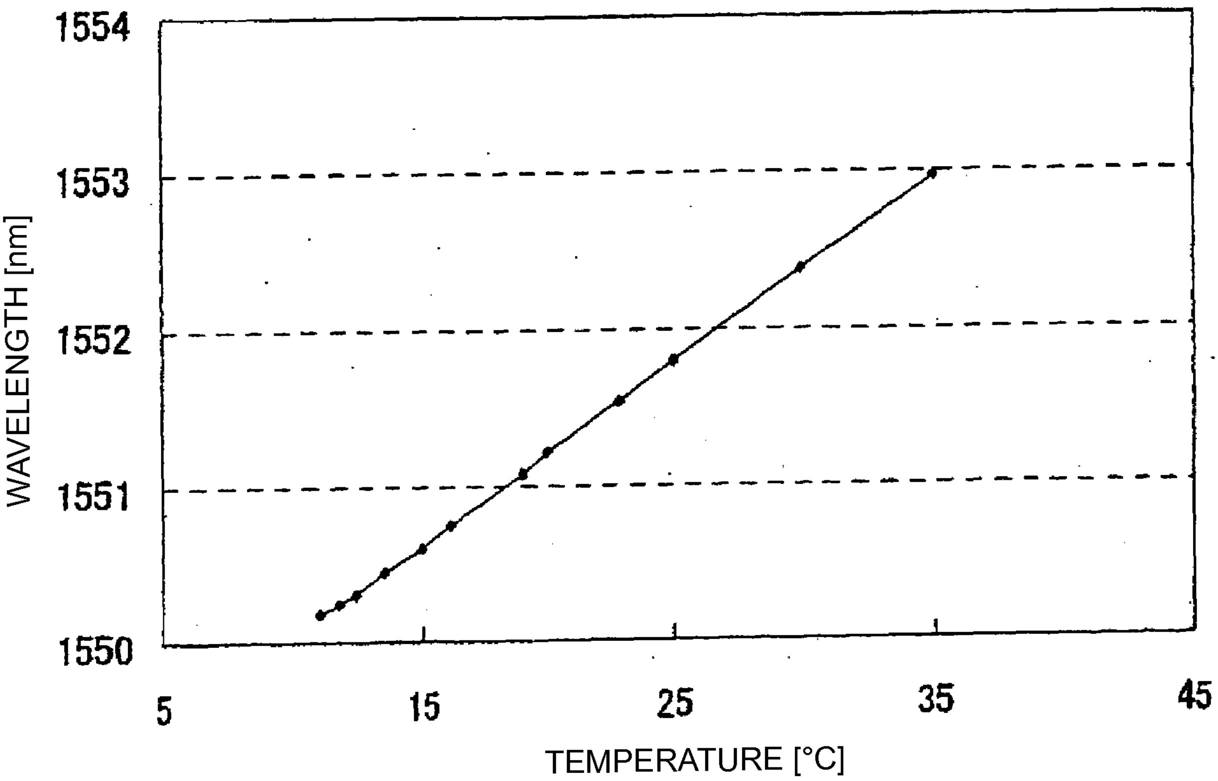
1554
1553
1552
1551
1550
WAVELENGTH [nm]
5
15
25
35
45
TEMPERATURE [°C]

Fig. 19

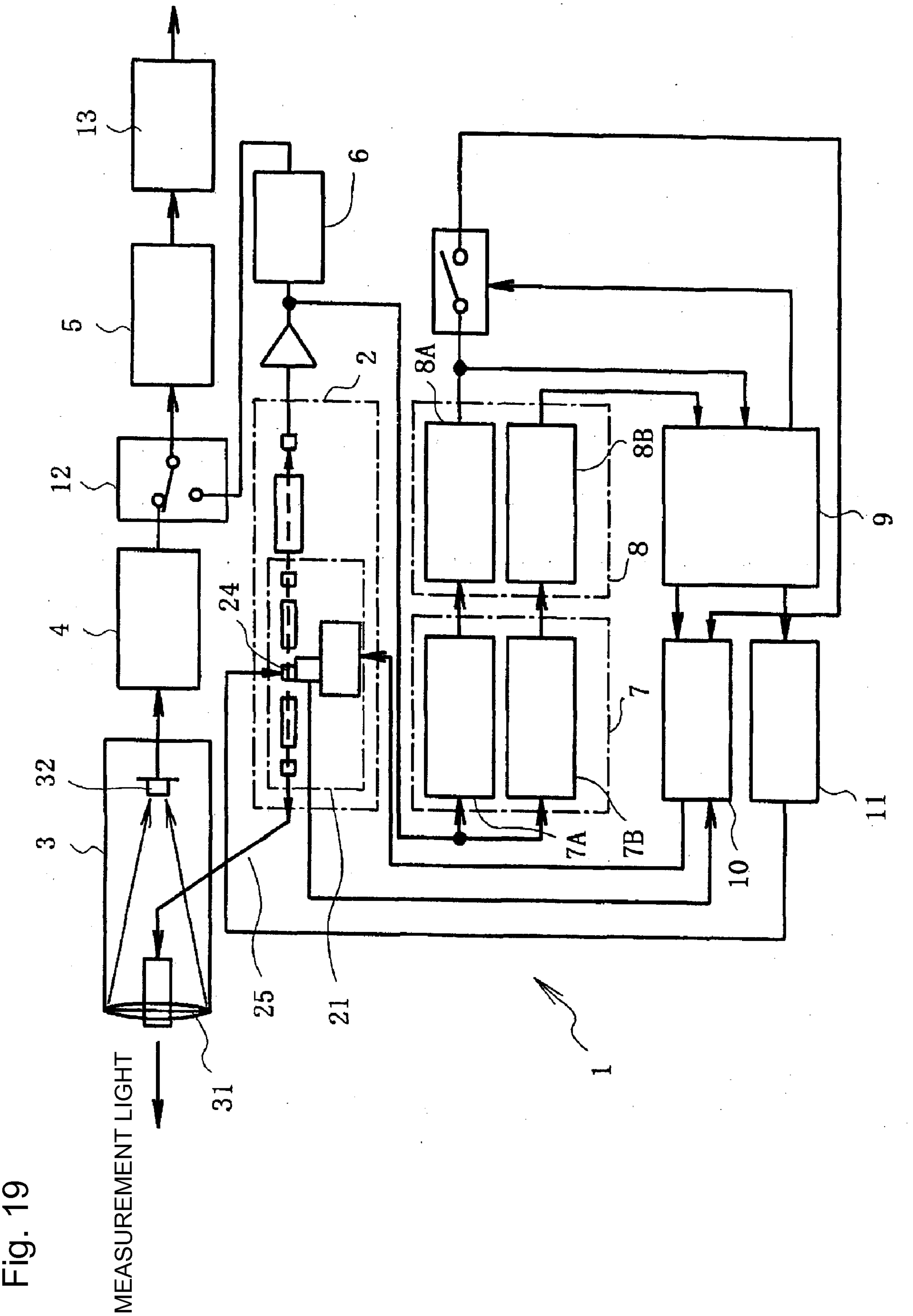
MEASUREMENT LIGHT
1
2
3
4
5
6
7
7A
7B
8
8A
8B
9
10
11
12
13
21
24
25
31
32

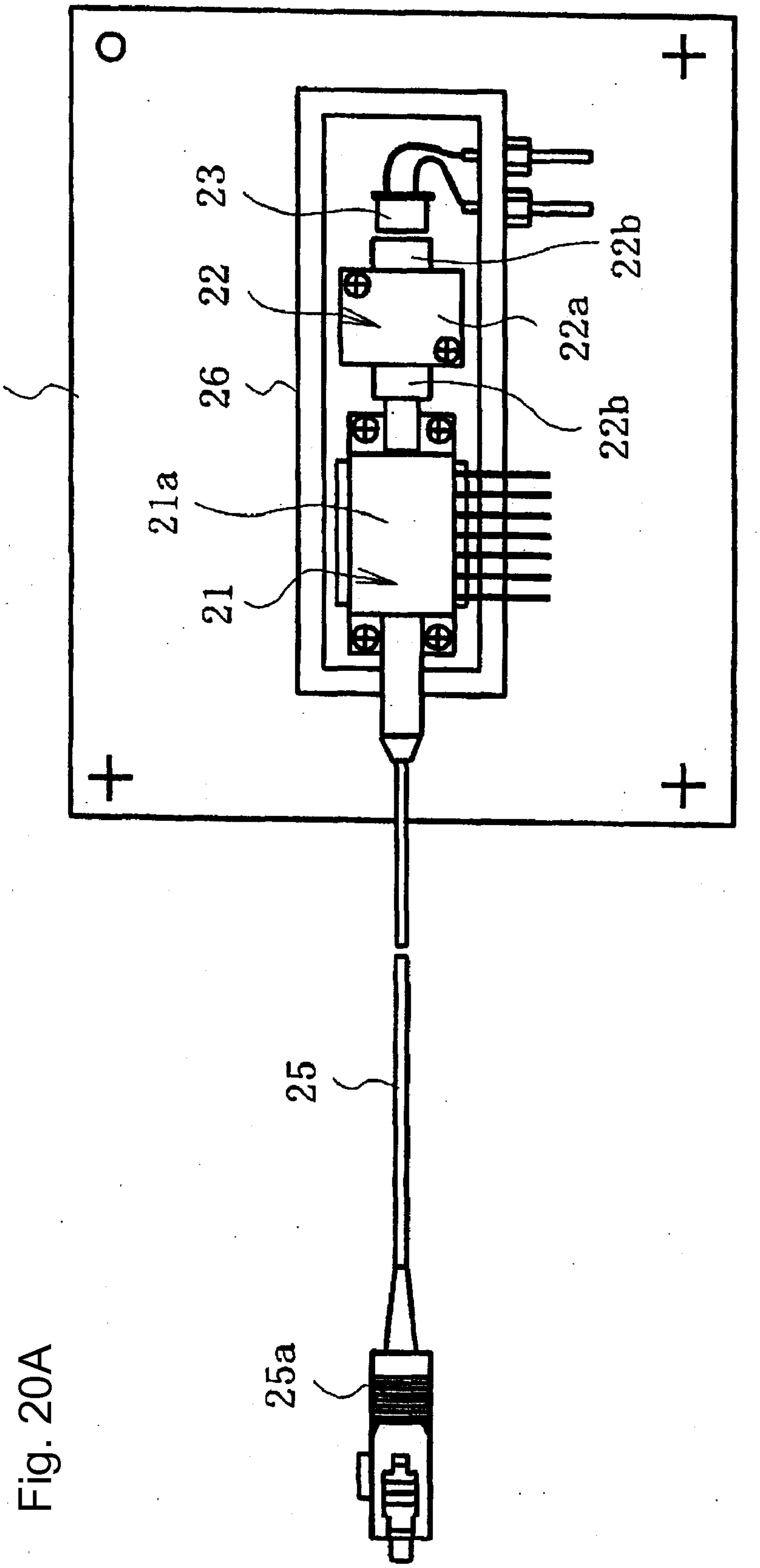


Fig. 20A

Fig. 20B

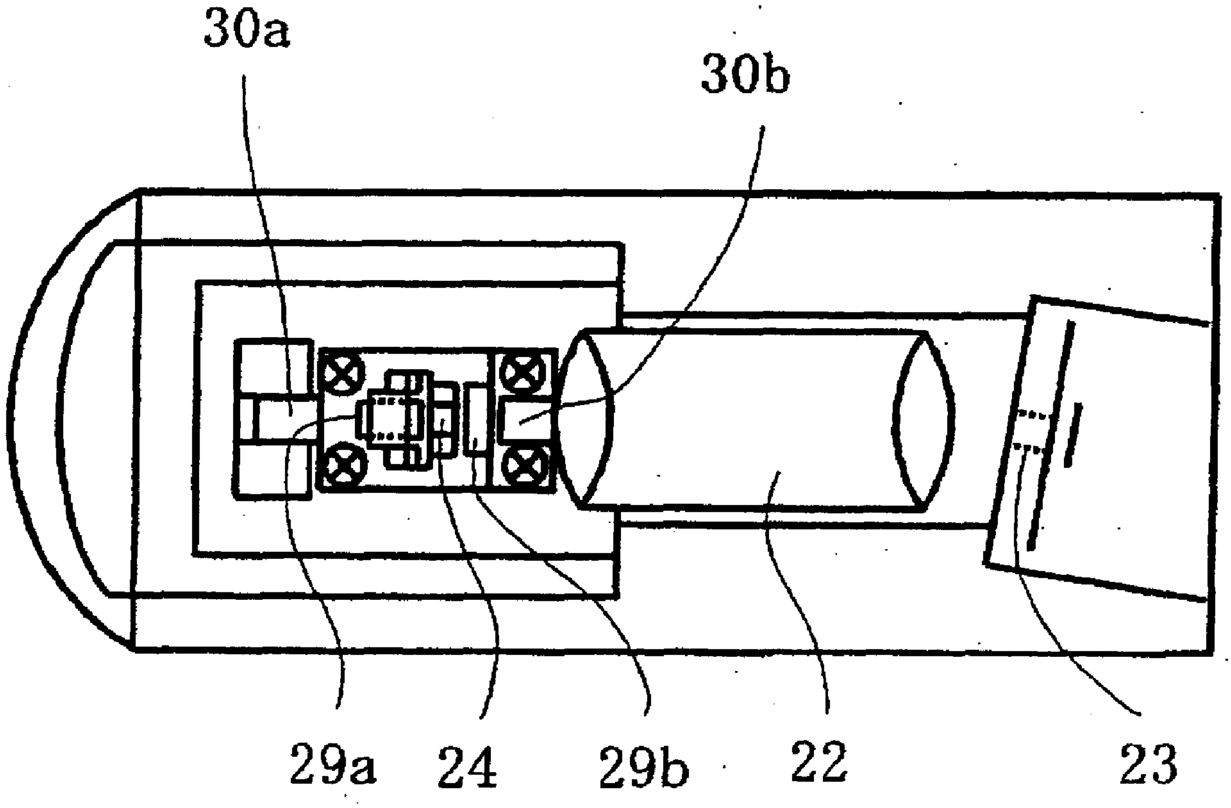

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H7151681 B
- JP 2001235418 A


### Non-patent literature cited in the description


- AIRCRAFT (ER-2) LASER INFRARED ABSORPTION SPECTROMETER (ALIAS) FOR IN-SITU STRATOSPERIC MEASUREMENTS OF HCI, N2O, CH4. NO2, AND HNO3. **WEBSTER C R et al.** APPLIED OPTICS. OPTICAL SOCIETY OF AMERICA, 20 January 1994, vol. 33, 454-472